# EUROPÄISCHE PATENTSCHRIFT

(11) **EP 2 268 946 B1**
(45) Veröffentlichungstag und Bekanntmachung des Hinweises auf die Patenterteilung: **11.06.2014**
(21) Anmeldenummer: 09732108.7
(22) Anmeldetag: 09.04.2009
(51) Int. Cl.: F16H 63/18

(54) **SCHALTWALZE MIT FÜHRUNGSRIPPENANORDNUNG**
GEAR-SHIFTING DRUM HAVING A GUIDE-RIB ARRANGEMENT
TAMBOUR DE SÉLECTION DOTÉ D UN AGENCEMENT DE NERVURES DE GUIDAGE

(30) Priorität: 15.04.2008 DE 102008018815; 15.04.2008 DE 102008018813; 15.04.2008 DE 102008018817; 15.04.2008 DE 102008018816
(43) Veröffentlichungstag der Anmeldung: 05.01.2011
(73) Patentinhaber: Schaeffler Technologies GmbH & Co. KG, 91074 Herzogenaurach (DE)
(72) Erfinder: MAIER, Waldemar, 91074 Herzogenaurach (DE); STANCIU, Ioan, 90542 Eckental (DE); KRÄMER, Klaus, 91460 Baudenbach (DE); LÖFFELMANN, Jochen, 91330 Eggolsheim (DE)
(86) Internationale Anmeldenummer: PCT/EP2009/054316
(87) Internationale Veröffentlichungsnummer: WO 2009/127599

(56) Entgegenhaltungen:
- EP-A- 1 225 375
- DE-A1- 19 528 460
- DE-A1-102006 002 702
- JP-A- 3 236 966

## Beschreibung

### Gebiet der Erfindung

Die Erfindung betrifft eine Schaltwalze mit Führungsrippenanordnung, mit einem ersten und einem zweiten Führungsrippenaufsatz, wobei der erste und der zweite Führungsrippenaufsatz jeweils oder gemeinsam auf einer Walze eine Kurvenbahn für mindestens ein Mitnehmerelement bilden.

### Hintergrund der Erfindung

Walzen mit Führungsrippen, insbesondere Schaltwalzen, werden beispielsweise zur Übertragung von Schaltbewegungen in Getrieben eingesetzt. Die Führungsrippe ist dabei oftmals als eine die Walze umlaufende Konturierung ausgebildet, welche eine Kurvenbahn bildet, die ein Mitnehmerelement bei einer Dreh- oder Schwenkbewegung der Walze in einer linearen Richtung, parallel zur Längserstreckung der Walze bewegt.

Mögliche Realisierungen der Kurvenbahnen sind durch Führungsnuten gegeben, welche spanabhebend in die Schaltwalzen eingebracht werden. Obwohl die spanabhebende Fertigung sehr genaue Kurvenbahnen erzeugen kann, ist der Fertigungsaufwand erheblich, so dass der Wunsch besteht, derartige Schaltwalzen kostengünstiger herzustellen.

Die Druckschrift DE 1202665 schlägt bereits eine Schaltwalze vor, welche aus einem zu einer durch eingeschweißte Scheiben oder dergleichen gehaltenen Trommel eingerollten, zur Kulissenbildung geschlitztem Blechstanzteil besteht.

Einen anderen Lösungsweg beschreitet die Offenlegungsschrift DE 197 275 69 A1, welche eine Schaltwalze mit einer Kurvenbahn vorschlägt, wobei auf der Mantelfläche der Schaltwalze zur Bildung der Kurvenbahn zumindest eine radial nach außen gerichtete Wandung vorgesehen ist. Als Wandungen werden beispielweise quadratische oder rechteckförmig gestaltete Endlosprofile verwendet, die entsprechend abgelängt und wellenförmig profiliert auf der Mantelfläche befestigt werden. Alternativ hierzu wird ein U-förmiges Profil erwähnt, welches wellenähnlich auf der Mantelfläche der Schaltwalze angeordnet ist.

Die gattungsgemäße Druckschrift DE 195 28 460 A1 beschäftigt sich in weiten Teilen mit Schaltwarzen aus Kunststoff. Die in den Figuren 16 ff. dargestellte Schaltwalze weist jedoch einen Grundkörper (Walzenabschnitt) mit Rippen auf, wobei der Grundkörper als Stahlachse oder Rohr realisiert ist und die Rippen als durch Ziehen oder Prägen hergestellte Blechscheiben ausgebildet und auf dem Grundkörper aufgeschweißt sind. DE 195 28 460 A 1 zeigt weiter eine Schaltwalze, bei der Schaltwalzenhauptkörper aus Kunststoff besteht. Diese Schaltwalze umfasst Einzelelemente mit Seitenflächen, wobei die Seitenflächen jeweils ein korrespondierendes Flächenpaar bilden, welches eine Schaltnut zur axialen Führung eines Mitnehmers formen.

DD 220566 A 1 zeigt eine Schalteinrichtung für Wechselgetriebe, insbesondere für Zweiradkraftfahrzeuge, welche eine Schaltwalze - hier Kurvenwalze genannt - aufweist, die über eine Doppelhakenklinke geschwenkt wird. Die Doppelhakenklinke greift zur Einleitung der Schaltbewegung in Schaltbolzen der Schaltwalze ein, welche in axialer Richtung der Schaltwalze ausgerichtet sind. Die Schaltwalze ist als ein Massivbauteil ausgebildet, in das Bohrungen eingebracht sind, um Aufnahmen für die Schaltbolzen zu bilden.

Die Druckschrift DE 10 2006 002 702 A betrifft eine zusammengesetzte Schaltwalze - hier Schaltnocken genannt - für ein Motorradgetriebe, welches zur Einleitung der Schaltbewegung ebenfalls eine Mehrzahl von Schaltbolzen beziehungsweise Schaltstiften aufweist. Die Schaltbolzen sind in Bohrungen beziehungsweise Sackbohrungen fixiert, welche in Einzelkomponenten der Schaltwalzen ausgebildet sind, die wieder als Massivbauteile realisiert sind.

### Aufgabe der Erfindung

Der Erfindung liegt die Aufgabe zu Grunde, eine Schaltwalze und eine Führungsrippenanordnung vorzuschlagen, welche ein sehr gutes Verhältnis zwischen Fertigungskosten und Fertigungstoleranz erlaubt.

### Beschreibung der Erfindung

Diese Aufgabe wird durch eine Führungsrippenanordnung mit den Merkmalen des Anspruchs 1 gelöst. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird eine Führungsrippenanordnung vorgeschlagen, welche für eine Walze, insbesondere für eine Schaltwalze, geeignet und/oder ausgebildet ist. Die Führungsrippenanordnung umfasst mindestens einen ersten und einem zweiten Führungsrippenaufsatz, wobei jeder Führungsrippenaufsatz eine Führungsrippe trägt.

Der Führungsrippenaufsatz weist mindestens eine Führungsrippe auf, welche sich in einer radialen Richtung zumindest abschnittsweise im eingebauten Zustand in Umfangsrichtung um die Walze erstreckt. Die Führungsrippe bildet eine Kurvenbahn, wobei die Kurvenbahn in Abhängigkeit der Umfangsposition unterschiedliche axiale Lagen einnimmt.

Der erste und der zweite Führungsrippenaufsatz bilden - bevorzugt über die Führungsrippen - entweder jeweils oder gemeinsam eine Kurvenbahn für mindestens ein Mitnehmerelement. Es kann somit zum einen vorgesehen sein, dass der erste Führungsrippenaufsatz eine erste Kurvenbahn und der zweite Führungsrippenaufsatz eine zweite Kurvenbahn bildet, wobei die jeweilige Führungsrippe zum Beispiel von einem gabelförmigen Mitnehmerelement abgefahren wird. Alternativ hierzu können die Führungsrippen der beiden Führungsrippenaufsätze gemeinsam eine Kurvenbahn bilden, wobei ein Mitnehmerelement, zum Beispiel ein Rollenelement, zwischen den beiden Führungsrippen geführt ist. Bei weiteren Variationen der Erfindung bilden die Führungsrippenaufsätze jeweils eine Kurvenbahn, wobei ein Mitnehmerelement gegebenenfalls unter Nutzung einer weiteren führenden Struktur geführt wird. Die Kurvenbahn erstreckt sich in Umlaufrichtung zumindest abschnittsweise um die Walze und weist eine Höhenkonturierung in axialer Richtung der Walze auf.

Der erste und der zweite Führungsrippenaufsatz sind jeweils als ein insbesondere separat gefertigtes Bauteil ausgebildet, welche miteinander verbunden auf der Walze und/oder auf einem Walzenabschnitt der Walze aufgesetzt und/oder aufsetzbar sind. Bevorzugt sind die Führungsrippenaufsätze unmittelbar miteinander verbunden. Die Verbindung zwischen de Führungsrippenaufsätzen kann wahlweise stoff-, kraft-, reib- und/oder formschlüssig ausgebildet sein. So ist es beispielsweise möglich, dass die Führungsrippenaufsätze mittels Pressverband, Toxen, Schweißen oder Prägen miteinander verbunden sind. Besonders bevorzugt sind die Führungsrippenaufsätze bereits miteinander verbunden, bevor diese auf die Walze aufgesetzt werden. Alternativ hierzu werden die Führungsrippenaufsätze erst auf die Walze bzw. den Walzenabschnitt aufgesetzt um dann im montierten Zustand gefügt.

Eine Überlegung der Erfindung ist es, dass durch die Verbindung der beiden Führungsrippenaufsätze eine besonders stabile und gegebenenfalls vormontierte Baueinheit gebildet ist, die in einfacher Weise auf die Walze aufsetzbar ist. Optional kann die Führungsrippenanordnung in einem ersten Fertigungsschritt gefügt werden und in einem zweiten Fertigungsschritt auf die Walze bzw. auf einen Tragkörper der Walze aufgesetzt werden.

Es ist gegebenenfalls möglich, dass die Führungsrippenanordnung weitere Führungsrippenaufsätze umfasst, welche mit dem ersten und/oder dem zweiten Führungsrippenaufsatz vorzugsweise unmittelbar verbunden ist bzw. sind.

Bei einer bevorzugten Ausführungsform der Erfindung sind der erste der zweite Führungsrippenaufsatz zumindest abschnittsweise in einer radialen Richtung bezüglich der Walze, insbesondere bezüglich der Längserstreckung der Walze, in einem Überlappungsbereich überlappend und/oder berührend angeordnet. Bevorzugt ist die Verbindung zwischen den Führungsrippenaufsätzen in diesem Überlappungsbereich positioniert.

Bei einer besonders bevorzugten Ausführungsform der Erfindung weisen mindestens ein Führungsrippenaufsatz, bevorzugt jedoch beide Führungsrippenaufsätze einen Befestigungsvorsprung auf, welcher in Bezug auf die Walze axial auskragt, absteht bzw. ausgerichtet ist, wobei die Befestigungsvorsprünge zueinander koaxial und/oder konzentrisch angeordnet sind. Besonders bevorzugt sind die Befestigungsvorsprünge als rohr- oder stutzenartige Abschnitte und/oder Ausformungen ausgebildet, welche ineinander verschachtelt und/oder geschoben sind. In dieser bevorzugten Ausführungsform ist die Führungsrippenanordnung besonders einfach herstellbar, indem die Befestigungsvorsprünge des ersten und des zweiten Führungsrippenaufsatzes ineinander geschoben werden und entweder reibschlüssig miteinander verbunden sind oder durch eine andere Verbindungstechnik, wie zum Beispiel Schweißen, Toxen, Umformen etc. miteinander bevorzugt nur zerstörend wieder trennbar verbunden sind.

Bei einer ersten möglichen Realisierung der Erfindung wird auf die Walze bzw. den Walzenabschnitt zunächst der erste Führungsrippenaufsatz aufgesetzt und in einem zweiten Schritt der zweite Führungsrippensatz an dem ersten Führungsrippenaufsatz befestigt. Bei einer zweiten möglichen Realisierung, welche bevorzugt ist, werden erster und zweiter Führungsrippenaufsatz zunächst zu der Führungsrippenanordnung verbunden und dann auf die Walze bzw. Walzenabschnitt montiert.

Der Führungsrippenaufsatz ist aus einem metallischen Werkstoff, insbesondere aus Stahl hergestellt und bevorzugt als ein einstückiges und/oder einmaterialiges Bauteil ausgebildet, welches durch eine Verfahrensfolge Trennen/Umformen gefertigt wird. Der Führungsrippenaufsatz ist somit insbesondere in der Großserie kostengünstig herstellbar.

Bei einer praxisnahen und kostengünstigen Fertigungsmethode der Führungsrippenanordnung sind die Führungsrippenaufsätze jeweils als ein Umformteil ausgebildet. Besonders bevorzugt ist jeder Führungsrippenaufsatz aus einer Blechplatine über eine Verfahrensfolge von Trennen und Umformen gebildet. Der Befestigungsvorsprung, insbesondere ausgebildet als rohr- oder stutzenartige Ausformung, wird bevorzugt durch Kragenziehen hergestellt.

Zur Anbindung des Führungsrippenaufsatzes an die Walze beziehungsweise an ein Zwischenelement zu der Walze, wie zum Beispiel ein rohrförmiges Zwischenelement, ist ein in axialer Richtung auskragender beziehungsweise sich erstreckender Befestigungsvorsprung angeformt, welcher im eingebauten Zustand die Walze und/oder das Zwischenelement in radialer Richtung zumindest abschnittsweise formschlüssig umgreift. In einer besonders einfachen Ausführungsform kann der Befestigungsvorsprung als ein rohrförmiger Stutzen realisiert sein.

Diese Ausbildung des Führungsrippenaufsatzes hat den Vorteil, dass durch den Befestigungsvorsprung der Führungsrippenaufsatz versteift und/oder mit einem verbesserten Verkippungsschutz auf der Walze ausgestattet ist. Besonders bevorzugt wird der Befestigungsvorsprung durch Kragenziehen geformt, welches insbesondere gemäß der DIN 8580 festgelegt ist.

Bei einer Ausgestaltung der Erfindung mit dem Ziel einer fertigungsgerechten Auslegung ist vorgesehen, dass mindestens eine Führungsrippe in Umlaufrichtung einen Ebenenabschnitt und einen Verformabschnitt zeigt, welche die Kurvenbahnen darstellen bzw. einen Teil der Kurvenbahnen bilden. Die Führungsrippe ist durch eine Verfahrensfolge gebildet, wobei zunächst eine Trennkontur, insbesondere ein Trennschnitt oder eine geschlossene Trennlinie, und eine nachfolgende Umformung vorgesehen ist, wobei durch die Umformung aus der Trennkontur eine randseitig geschlossene Aussparung gebildet ist, welche in einem Übergangsbereich zwischen der Kurvenbahn und dem Befestigungsvorsprung angeordnet ist. Dadurch, dass in dem Übergangsbereich zwischen der Kurvenbahn und dem Befestigungsvorsprung das Material durch die Aussparung zumindest abschnittsweise unterbrochen ist, wird der Umformvorgang erheblich vereinfacht, da ansonsten in diesem Übergangsbereich ein hoher Streck- oder Umformgrad benötigt und damit die Gefahr des Überschreitens der Streckgrenze und das Reißen des Materials vorliegen würde. Durch eine Entkopplung des Befestigungsvorsprungs und der Kurvenbahn wird diese Gefahr verringert. Mit anderen Worten, die Aussparung bzw. die Trennkontur ist bevorzugt so positioniert, dass Bereiche in dem Führungsrippenaufsatz, welche durch die Umformung besonders stark umgeformt werden, das heißt, einen sehr hohen Streckgrad aufweisen, ausgespart sind, um ein Reißen des Bauteils während des Umformens zu vermeiden. Besonders bevorzugt ist die Aussparung bzw. die vorhergehende Trennkontur im Bereich eines Extremums, also eines Maximums oder Minimums der Kurvenbahn in Bezug auf den axialen Höhenverlauf vorgesehen.

Als weiterer, möglicher Vorteil kann es sich ergeben, dass die Genauigkeit der Führungsrippe erhöht ist, da diese weniger stark durch den Umformvorgang belastet wird bzw. dass aufgrund des resultierenden, niedrigeren Umformgrades das Formen der Führungsrippe einfacher und genauer ist.

Es ist vorgesehen, dass die Trennkontur im Verlauf mindestens zwei Kurvenabschnitte aufweist, welche einen unterschiedlichen Krümmungsmittelpunkt zeigen. Im Gegensatz dazu weist ein kreisrundes Loch nur einen einzigen Krümmungsmittelpunkt auf. Durch die Verwendung von Kurvenabschnitten mit unterschiedlichen Krümmungsmittelpunkten kann die Trennkontur und die daraus resultierende Aussparung optimal der geplanten Umformung angepasst werden. Die Trennkontur wird dabei entweder in die Blechplatine oder in ein Zwischenprodukt eingebracht, bei dem beispielsweise aus der Blechplatine bereits der Befestigungsvorsprung ausgeformt ist.

Bei einer Ergänzung beziehungsweise Alternative der Erfindung ist vorgesehen, dass bei einer axialen Projektion die maximale Erstreckung der Aussparung in Umlaufrichtung größer als in radialer Richtung ausgebildet ist. Bei dieser Möglichkeit wird somit im Hinblick auf das Endprodukt beansprucht, dass bei einer Draufsicht in axialer Richtung die Aussparung zwischen Kurvenbahn und Befestigungsvorsprung in Umlaufrichtung größer als in radialer Richtung ausgebildet ist. In Grenzfällen kann die Aussparung in radialer Richtung auch auf Null zurückgehen.

Die beiden Alternativen der Erfindung tragen den gemeinsamen Gedanken, die Trennkontur und somit die resultierende Aussparung so anzuordnen, dass die Gefahr eines Reißens des Bauteils aufgrund eines zu großen Streckgrades verringert wird.

Bei einer bevorzugten Ausführungsform der Erfindung wird vorgeschlagen, dass die Aussparung in einem Bereich der Führungsrippe angeordnet ist, in dem ohne die Aussparung ein maximaler Umformgrad und/oder Abstreckgrad vorherrschen würde. Die Aussparung wird gezielt so platziert, dass Bereiche maximaler Beanspruchung bei der Umformung ausgeschnitten sind.

Bei einer bevorzugten konstruktiven Realisierung der Erfindung teilt sich die Kurvenbahn auf einen Ebenenabschnitt und einen Verformabschnitt auf. Der Ebenenabschnitt ist bevorzugt in einer Radialebene zur axialen Erstreckung des Führungsrippenaufsatzes ausgerichtet und wird bevorzugt durch einen unverformten Abschnitt der Platine gebildet. Der Verformabschnitt ist dagegen auf einem konturierten beziehungsweise verformten Bereich der Führungsrippe ausgebildet. Dabei ist es nicht zwingend notwendig, dass der gesamte Bereich der Kurvenbahn von einem Mitnehmerelement abgefahren wird. Bei dieser bevorzugten Realisierung wird beansprucht, dass sich die und/oder jede derartige Aussparung über mindestens 25 %, vorzugsweise über mindestens 35 %, insbesondere über mindestens 45 % des Winkelbereichs des gesamten Verformabschnitts in Umlaufrichtung erstreckt. Mit dieser Realisierung wird erreicht, dass der die Kurvenbahn tragende Teil der Führungsrippe und der Befestigungsvorsprung weitgehend entkoppelt sind. Hierbei ist jedoch ein Kompromiss zu finden, so darf die Entkopplung nicht so weit gehen, dass die benötigte Stabilität des die Kurvenbahn tragenden Abschnitts der Führungsrippe zu gering wird.

Auch aus dieser Stabilitätsüberlegung heraus wird optional ergänzend vorgeschlagen, dass in der Führungsrippe mindestens zwei derartige Aussparungen eingebracht sind, wobei die Aussparungen durch mindestens einen Stützsteg getrennt sind. Der Stützsteg erlaubt eine Kraftableitung von der Kurvenbahn in den Befestigungsvorsprung. Die Breite des Stützstegs in Umlaufrichtung ist an die erforderliche Stabilität des Bereichs der Führungsrippe angepasst, welche die Kurvenbahn trägt. Es hat sich jedoch als vorteilhaft erwiesen, wenn der Maximaldurchmesser des Stützsteges und/oder der Minimaldurchmesser des Stützstegs in Umlaufrichtung kleiner als eine, eine beliebige oder beide der an dem Stützsteg angrenzenden Aussparungen in Umlaufrichtung ausgebildet ist. Es reicht somit ein vergleichsweise schmaler Stützsteg, um die benötigte Stabilität der Führungsrippe sicherzustellen.

Wenn der Stützsteg - wie es bei einer bevorzugten Weiterbildung vorgeschlagen wird - am und/oder im Bereich eines Wendepunkts der Kurvenbahn angeordnet ist, muss der Stützsteg wenig verformt werden, weist somit einen geringen Streckgrad auf und kann die Führungsrippe optimal abstützen. Der Wendepunkt der Kurvenbahn ist in Umlaufrichtung bevorzugt an der Stelle in dem Verformabschnitt angeordnet, welche sich in gleicher oder zumindest ähnlicher axialer Höhe wie der Ebenenabschnitt befindet, und/oder in einem Bereich zwischen einem Extremum zu einem nächsten Extremum jeweils in axialer Richtung der Kurvenbahn.

Bei der Fertigung hatte es sich als vorteilhaft herausgestellt, dass der Befestigungsvorsprung einen radial abstehenden abschnittsweise umlaufenden Umlaufsteg aufweist, welcher sich im Bereich der mindestens einen Aussparung erstreckt. Besonders bevorzugt weist der Umlaufsteg über mindestens 70 %, vorzugsweise mindestens 80 % und insbesondere mindestens 90 % des Winkelbereichs der Aussparung eine gleichmäßige radiale Breite auf. Zum einen erleichtert der Umlaufsteg das Einbringen der Trennkontur, wenn diese in das Zwischenprodukt eingebracht wird, in dem bereits der Befestigungsvorsprung ausgeformt wurde. Zum anderen kann ein Umformwerkzeug beziehungsweise ein Niederhalter den Umlaufsteg erfassen und dadurch das Zwischenprodukt zu dem Führungsrippenaufsatz bei dem Umformvorgang fixieren.

Obwohl der Umformgrad beziehungsweise der Streckgrad in dem Führungsrippenaufsatz durch das Einbringen der Trennkontur beziehungsweise der Aussparung reduziert wurde, wird trotzdem die Blechdicke in dem Verformabschnitt aufgrund der Ausformung der Kurvenbahn verringert. Somit zeigt sich als ein konstruktives Merkmal, dass die Blechdicke in dem Verformabschnitt im Mittel dünner als in dem Umlaufsteg und/oder Ebenenabschnitt ausgebildet ist. Betrachtet man den Materialfluss während der Umformung, so wird dieser in dem Verformabschnitt maßgeblich in Umlaufrichtung gerichtet und weniger in der radialen Richtung ausgeprägt sein.

Ein weiterer Gegenstand der Erfindung betrifft eine Schaltwalze für eine Schaltvorrichtung von einem Zahnräderwechselgetriebe in einem Fahrzeug, insbesondere in einem Motorrad, mit einem Tragkörper, welcher in axialer Erstreckung einen Walzenabschnitt aufweist, mit mindestens einem Führungsrippenaufsatz, der auf dem Walzenabschnitt aufgesetzt und mit diesem fest, beispielweise stoffschlüssig, verbunden ist.

Die Schaltwalze weist einen auch als Tragkörper oder Walzenabschnitt bezeichneten Grundkörper auf, welcher in axialer Erstreckung einen zylindrisch ausgebildeten Walzenabschnitt zeigt. Der Grundkörper der Schaltwalze kann entweder einstückig ausgebildet sein, wobei der Tragkörper und der Walzenabschnitt einen integralen Teil der Schaltwalze bildet, bevorzugt ist jedoch, dass die Schaltwalze mehrteilig ausgebildet ist und der Tragkörper als ein separates Bauteil realisiert ist. Der Führungsrippenaufsatz auf dem Walzenabschnitt ist mit diesem fest, insbesondere drehfest und verschiebefest, verbunden.

Die Schaltwalze und/oder der Grundkörper weist bzw. weisen mindestens eine radial orientierte Kunststoffführungsfläche auf, welche den Grundkörper in Umlaufrichtung zumindest abschnittsweise umläuft und zur axialen Führung des Mitnehmers ausgebildet ist. Insbesondere bildet die Kunststoffführungsfläche einen Teil einer Kulissen- und/oder Kurvenbahnführung, welche die Schalt- und/oder Wählbewegung an den Mitnehmer überträgt.

Im Rahmen der Erfindung wird vorgeschlagen, dass der Grundkörper der Schaltwalze aus Metall bzw. aus einem metallischen Werkstoff ausgebildet ist.

Eine Überlegung der Erfindung ist es, Abschnitte der Schaltwalze mit großer mechanischer Belastung im Betrieb aus einem stark widerstandsfähigen Material, also Metall, auszubilden. Abschnitte der Schaltwalze, bei denen eher die Genauigkeit im Vordergrund steht, werden dagegen aus Kunststoff gefertigt, da eine genaue Formgebung bei Kunststoff einfacher bzw. mit geringerem Aufwand als bei Metall oder metallischen Werkstoffen zu erreichen ist. Die Schaltwalze wird somit in einem belastungs- und funktionsgerechten Materialmix konzipiert.

Um den Gedanken der Erfindung zu verdeutlichen, wird bei einer bevorzugten Ausführungsform vorgeschlagen, dass die Kunststoffführungsfläche eine Kurvenbahn beschreibt, auf die der Mitnehmer geführt wird. Entlang der Kurvenbahn ändert sich aufgrund der Führung durch die Kunststoffführungsfläche die axiale Position des Mitnehmers.

Obwohl es prinzipiell im Rahmen der Erfindung liegt, dass die Kunststoffführungsfläche durch einen auf Abschnitte der Schaltwalze oder Zwischenelemente aufgespritzten Kunststoffabschnitt gebildet wird, ist es bevorzugt, dass die Kunststoffführungsfläche auf einem Kunststoffeinsatz ausgebildet ist, welcher als separater Körper auf dem Grundkörper aufgesetzt ist. Der Kunststoffeinsatz kann unmittelbar auf dem Grundkörper aufgesetzt sein, bei bevorzugten Abwandlungen wird der Kunststoffeinsatz jedoch auf mindestens einem Zwischenelement, das von dem Grundkörper (Walzenabschnitt) getragen wird, aufgesetzt. Insbesondere wird der Kunststoffeinsatz ohne den Grundkörper in einem separaten Werkzeug gefertigt.

Eine bevorzugte Ausführungsform für ein derartiges Zwischenelement wird durch eine Führungsrippenaufsatz gebildet, welche den Kunststoffeinsatz und/oder die Kunststoffführungsfläche trägt. Dabei ist es bevorzugt, dass der Kunststoffeinsatz auf der Führungsrippe form- und/oder kraftschlüssig gehalten wird. Beispielsweise wird der Kunststoffeinsatz über die Führungsrippe gestülpt und/oder in die Führungsrippe eingeclipst.

Bei einer bevorzugten Weiterbildung der Erfindung ist die Segmentscheibe aus einem metallischen Werkstoff bzw. Metall ausgebildet. Diese Weiterbildung unterstreicht nochmals die erfinderische Idee, das Material für die Schaltwalze bzw. deren Abschnitte belastungs- und/oder funktionsgerecht einzusetzen. Bei dieser Weiterbildung werden in axialer Richtung wirkende Kräfte über den Kunststoffeinsatz bzw. die Kunststoffführungsfläche auf den metallische Führungsrippenaufsatz übertragen und von dort aus in den Grundkörper abgeleitet. Der Kraftflussrichtungsänderungen bzw. stark belastete Bereiche werden somit weitgehend in metallischen Abschnitten der Schaltwalze umgesetzt.

Alternativ oder ergänzend ist der Führungsrippenaufsatz mit dem Grundkörper stoffschlüssig, beispielsweise durch schweißen, verbunden.

Bei einer bevorzugten Ausführungsform der Erfindung weist die Schaltwalze mindestens zwei der Kunststoffführungsflächen auf, welche gemeinsam einen Schalt- und/oder Wählkanal und/oder -steg für den Mitnehmer bilden. Für den Fall eines Schalt- und/oder Wählkanals ist der Mitnehmer beispielsweise als ein Mitnehmerfinger ausgebildet, welcher in den Kanal eingreift. Bei einer Ausführung als Schalt- und/oder Wählsteg ist der Mitnehmer zum Beispiel als eine Gabel realisiert, welche den Steg beidseitig umgreift. Sowohl Steg als auch Kanal verlaufen entlang der Kurvenbahn.

Bei einer Weiterbildung der Erfindung sind die zwei Kunststoffführungsflächen zueinander zugewandt und auf zwei separaten Kunststoffeinsätzen angeordnet. Beispielsweise ist auf einer ersten Führungsrippe ein erster Kunststoffeinsatz und auf einer zweiten Führungsrippe ein zweiter Kunststoffeinsatz positioniert, welche jeweils eine Kunststoffführungsfläche aufweisen, welche gemeinsam den Schalt- und/oder Wählkanal bilden. Bei einer anderen Weiterbildung der Erfindung sind die Kunststoffführungsflächen auf einem gemeinsamen Kunststoffeinsatz angeordnet. Dies hat den Vorteil, dass die beiden Kunststoffführungsflächen zueinander sehr genau angeordnet werden können, da diese aus einem gemeinsamen Werkzeug stammen. Vorzugsweise weist der gemeinsame Kunststoffeinsatz eine Schalt- und/oder Wählnut als Kanal auf.

Bei einer praxisnahen Realisierung der Erfindung umgreift der Kunststoffeinsatz den radialen Randbereich der zugeordneten Führungsrippe formschlüssig. Beispielsweise weist der Kunststoffeinsatz einen radial nach innen geöffneten Kanal auf, in den der radiale Randbereich der zugeordneten Führungsrippe eingelegt wird. Der Kunststoffeinsatz kann entlang der Umlaufrichtung geschlossen ausgebildet sein, so dass der Kanal einen Endloskanal bildet. Bei alternativen Ausführungsformen ist der Kunststoffeinsatz zumindest in Hinsicht auf den Kanal unterbrochen ausgebildet, so dass der Kunststoffeinsatz in einfacher Weise auf die zugeordnete Führungsrippe aufgesetzt werden kann. Alternativ oder ergänzend zeigt der Kunststoffeinsatz Formschlussorgane, die in Aufnahmen der Führungsrippe(n) formschlüssig eingreifen. Derartige Formschlussorgane können beispielsweise als axial ausgerichtete Stifte, Nocken oder Noppen ausgebildet sein, welche in korrespondierend dazu ausgebildete Aufnahmen, insbesondere Öffnungen der Führungsrippe(n) eingreifen.

Bei einer besonders bevorzugten Ausführungsform der Erfindung sind die Führungsrippen im Bereich der axialen Projektion der Kunststoffführungsflächen parallel zu der Kurvenbahn verlaufend ausgebildet. Bei dieser Ausführungsform ist es möglich, mehrere Kurvenbahnen auf einer Schaltwalze mit geringem axialen Abstand zueinander zu positionieren, da die Steigungen der Kurvenbahnen in axialer Richtung zueinander in Umlaufrichtung versetzt angeordnet werden können.

Es ist jedoch auch möglich, den Steigungsverlauf in Umlaufrichtung der Führungsrippe in dem gesagten Bereich nur näherungsweise an die Kurvenbahn anzugleichen, um Fertigungskosten zu sparen. Die Bauraumersparnis ist bei dieser Ausführungsform in analoger Weise erreicht, die genaue Führung des Mitnehmers kann dagegen durch eine genaue Kurvenbahn, welche durch die Kunststoffführungsfläche bzw. -flächen realisiert ist, erreicht werden.

Ein weiterer Gegenstand der Erfindung betrifft eine Walze, vorzugsweise eine Schaltwalze, im speziellen für ein Motorrad, welche eine oder mehrere der Führungsrippenanordnungen aufweist.

Bei einer bevorzugten Realisierung weist die Walze einen Walzenabschnitt auf, welcher optional als rohrförmiges Bauteil ausgebildet ist und/oder zum Beispiel eine in axialer Richtung verlaufende Durchgangsöffnung aufweist, wobei die mindestens eine Führungsrippenanordnung auf dem Walzenabschnitt befestigt ist. Gegebenenfalls können an den freien Enden des rohrförmigen Bauteils weitere Bestandteile der Schaltwalze angeordnet sein.

Ein nächster Gegenstand der Erfindung betrifft ein Verfahren zur Fertigung der Walze, insbesondere der Schaltwalze. In einem ersten Schritt werden mindestens zwei der Führungsrippenaufsätze zu einer Führungsrippenanordnung nach einem der vorhergehenden Ansprüche bzw. wie sie zuvor beschrieben wurde, miteinander fest verbunden und in einem zweiten Schritt als Baueinheit auf der Walze, insbesondere auf dem Walzenabschnitt, befestigt.

Zur Einleitung der Schaltbewegung zeigt die Schaltwalze einen Schaltstiftabschnitt, welcher eine Mehrzahl von Schaltstiften umfasst. Die Schaltstifte sind bevorzugt in axialer Erstreckung der Schaltwalze ausgerichtet und in Umlaufrichtung bevorzugt äquidistant auf einem gemeinsamen Durchmesser positioniert. Die Schaltstifte weisen bevorzugt einen kreisrunden Querschnitt auf, können abweichend davon auch einen anderen Querschnitt, z.B. mehreckig oder im Längenverlauf variierend zeigen. Die Schaltwalze und/oder der Schaltstiftabschnitt umfasst mindestens ein Haltebauteil, wobei mindestens einer der Schaltstifte in das Haltebauteil ein- und/oder durchgreift.

Im Fall des Eingreifens ist es bevorzugt, dass das Haltebauteil eine sacklochartig ausgebildete Aufnahme aufweist, im Fall des Durchgreifens weist das Haltebauteil bevorzugt eine Durchgangsöffnung auf, die vorzugsweise passgenau oder mit Spielpassung zu dem Durchmesser des Schaltstifts ausgebildet ist. Die Schaltwalze beziehungsweise der Schaltstiftabschnitt kann einen, zwei oder mehrere derartige Haltebauteile umfassen.

Im Rahmen der Erfindung wird vorgeschlagen, dass das Haltebauteil, also mindestens eines der Haltebauteile, als ein Blechformteil ausgebildet ist. Insbesondere weist das Blechformteil mindestens einen Umformbereich auf, der durch einen Umformschritt nach der Herstellung des zu Grunde liegenden Halbzeugs durchgeführt wurde. Beispielsweise ist das Blechformteil durch Umformung einer Blechplatine gebildet.

Es ist dabei eine Überlegung der Erfindung, im Bereich des Schaltstiftabschnitts die ansonsten üblichen, kostenintensiven Massivbauteile durch Blechformteile zu ersetzen und auf diese Weise die Fertigungskosten zu minimieren. Dementsprechend ist es besonders bevorzugt, wenn das Haltebauteil als ein Umformbauteil und/oder als ein Spanlosbauteil ausgebildet ist.

Bei einer Weiterbildung der Erfindung ist es bevorzugt, wenn das Haltebauteil einen Aufnahmeumformbereich aufweist, in den der Schaltstift mit einem Endabschnitt eingreift, wobei der Aufnahmeumformbereich ausgebildet ist, den Schaltstift in axialer Richtung der Schaltwalze zu halten. Bei dieser Ausgestaltung ergibt sich der Vorteil, dass Aufnahmeumformungen für einen, einige oder alle Schaltstifte durch einen einzigen Umformvorgang eingebracht werden können.

Insbesondere um die Genauigkeit des Bauteils zu erhöhen und eine Positionierhilfe für die Schaltstifte zu erhalten, ist es bevorzugt, wenn der, einige bzw. jeder Aufnahmeumformbereich zur Aufnahme von genau einem Endabschnitt ausgebildet ist. Dadurch dass dem einzelnen, einigen oder jedem Endabschnitt genau ein Aufnahmeumformbereich zugeordnet ist, ist die Einbaulage der Schaltstifte durch die Position der Aufnahmeumformbereiche definiert, welche durch den erzeugenden Umformvorgang in der Massenherstellung hochgenau positioniert werden können.

Besonders bevorzugt ist der Aufnahmeumformbereich als eine Prägung ausgebildet, wobei vorzugsweise ein Bereich mit dem Durchmesser des Schaltstifts in dem Haltebauteil eingeprägt wird, vorzugsweise derart, dass auf der dem Schaltstift gegenüberliegenden Seite des Haltebauteils ein Abrissabschnitt entsteht. Der Abrissabschnitt ist vorzugsweise als eine Auswölbung ausgebildet, welche in einem Mittelbereich nahezu senkrecht zu der Flächenerstreckung des umliegenden Blechs des Haltebauteils ausgerichtet ist.

Bei einer besonders bevorzugten Realisierung der Erfindung weist der Aufnahmeumformbereich einen Aufnahmedurchmesser zur Aufnahme des Endabschnitts, einen Außendurchmesser des Abrissabschnitts und/oder des Mittelbereichs auf der dem Schaltstift abgewandten Seite und eine Blechdicke in einem unverformten Bereich auf, wobei der Außendurchmesser kleiner als der Aufnahmedurchmesser zuzüglich der einfachen oder zweifachen Blechdicke ist. Möglich ist auch der Einsatz eines Stanzverfahrens, wobei die Form des Abrissabschnitts durch die Form einer Öffnung in einem entsprechend gestaltetem Werkzeug gebildet wird. Die Öffnung weist dabei einen Durchmesser auf, welcher gleich oder größer als der Durchmesser des Schaltstifts, jedoch kleiner als der Durchmesser des Schaltstifts zuzüglich der einfachen oder der doppelten Blechdicke des Haltebauteils gewählt ist.

Der Verbindungsabschnitt zwischen dem Abrissabschnitt und dem Grundkörper des Haltebauteils ist somit im Bereich des minimalen Verbindungsquerschnitts kleiner als die Blechdicke des Haltebauteils in unverformtem Zustand.

Bei einer Alternative oder einer Weiterbildung der Erfindung ist vorgesehen, dass das bzw. ein weiteres derartiges Haltebauteil mindestens eine Durchgangsöffnung aufweist, die den Schaltstift in radialer Ebene zu der Schalwalze formschlüssig aufnimmt und bevorzugt durch eine Stanzung gebildet ist. Durch die Durchgangsöffnung wird der Schaltstift in radialer Richtung in der Einbaulage definiert bzw. fixiert. Der axiale Anschlag des Schaltstifts kann über ein weiteres Bauteil erfolgen, welches bevorzugt als ein Endanschlag ausgebildet ist und/oder ausschließlich die axiale, nicht jedoch die radiale Lage des Schaltstifts definiert.

Bei einer bevorzugten Verkörperung der Erfindung umfasst das mindestens eine Haltebauteil ein erstes Haltebauteil, welches als eine napfförmige Hülse ausgebildet ist, die an der offenen Seite einen radial ausgerichteten Kragen zeigt, auf dem die Aufnahmestrukturen für die Schaltstifte, also insbesondere die Aufnahmeumformbereiche beziehungsweise die Durchgangsöffnungen, angeordnet sind. Die napfförmige Hülse ist bevorzugt durch Strecken oder Ziehen aus einer Blechplatine, insbesondere über Kaltumformung, gefertigt.

Bei einer möglichen Weiterbildung oder Alternative der Erfindung umfasst das mindestens eine Haltebauteil ein zweites Haltebauteil, welches einen ersten und einen zweiten Zylindermantelabschnitt zeigt, die konzentrisch und/oder koaxial zueinander angeordnet sind. Funktionell betrachtet dient der erste Zylindermantelabschnitt zur Aufnahme des ersten Haltebauteils, insbesondere eines Napfabschnitts des ersten Haltebauteils, und/oder der zweite Zylindermantelabschnitt als eine Lauffläche oder Laufbahn für ein Lager, insbesondere ein Gleitlager, eine Hülse oder ein Wälzlager.

Bei Weiterbildung der Erfindung zeigt das zweite Haltebauteil einen Verbindungsabschnitt, welcher bevorzugt als ein in einer Radialebene der Schaltwalze ausgerichteter Kreisring ausgebildet ist, welcher den ersten und den zweiten Zylindermantelabschnitt einstückig verbindet. Analog wie das erste Haltebauteil ist auch das zweite Haltebauteil bevorzugt als ein Umformbauteil, insbesondere als ein aus einer Blechplatine durch Kaltumformung gefertigtes Bauteil ausgebildet. Auf dem Verbindungsabschnitt sind bevorzugt die Aufnahmestrukturen, also die Aufnahmeumformbereiche und/oder die Durchgangsöffnungen für die Schaltstifte angeordnet.

Es ist dabei im Rahmen der Erfindung, dass sowohl auf dem ersten als auch auf dem zweiten Haltebauteil Aufnahmeumformbereiche angeordnet sind. Alternativ ist es möglich, dass auf dem ersten und auf dem zweiten Haltebauteil Durchgangsöffnungen eingebracht sind. Als eine weitere Alternative kann auf einem der beiden Haltebauteile Durchgangsöffnungen und auf dem anderen Haltebauteil Aufnahmeumformbereiche eingebracht sein. Es ist sogar denkbar, dass auf jedem oder auf einem der zwei Haltebauteile eine Mischung aus Durchgangsöffnungen und Aufnahmeumformbereiche positioniert sind.

Wie bereits eingangs erwähnt, ist es bevorzugt, wenn die Schaltwalze mehrteilig ausgebildet ist, wobei das erste und das zweite Haltebauteil unmittelbar miteinander fest, zum Beispiel über Presssitz, verbunden sind. Das erste und das zweite Haltebauteil zusammen mit den Schaltstiften bilden dabei den Schaltstiftabschnitt.

Bevorzugt wird der Schaltstiftabschnitt in einen Walzenabschnitt, welcher bevorzugt als ein Rohrabschnitt ausgebildet ist, eingesetzt, wobei das erste Haltebauteil über das zweite Bauteil und optional über ein weiteres Zwischenelement auf dem Walzenabschnitt festgelegt ist. Eine direkte Befestigung des ersten Haltebauteils in dem Walzenabschnitt ist bei dieser bevorzugten Ausführungsform dagegen nicht vorgesehen.

In einer Weiterführung des allgemeinen erfinderischen Gedankens, die Schaltwalze aus Blechformteilen zusammenzustellen, ist es bevorzugt, dass sowohl das erste Haltebauteil, das zweite Haltebauteil und der Walzenabschnitt jeweils als Blechteile realisiert sind.

### Kurze Beschreibung der Zeichnungen

Weitere Merkmale, Vorteile und Wirkung der Erfindung ergeben sich aus der nachfolgenden Beschreibung eines bevorzugten Ausführungsbeispiels der Erfindung sowie den beigefügten Figuren. Dabei zeigen:
- Figur 1: eine schematische dreidimensionale Darstellung einer Schaltwalze für ein Kraftfahrzeug, insbesondere für ein Motorrad, als ein erstes Ausführungsbeispiel der Erfindung;
- Figur 2: die Schaltwalze in der Figur 1 in einem schematischen Längsschnitt.
- Figur 3: einen Führungsrippenaufsatz gemäß der Erfindung in einer dreidimensionalen Darstellung;
- Figuren 4, 5: den Führungsrippenaufsatz in der Figur 1 aus anderen Perspektiven.
- Figur 6: einen schematischen Längsschnitt durch ein weiteres Ausführungsbeispiel einer Schaltwalze;
- Figuren 7 a, b, c: zwei Segmentscheiben bzw. einen Kunststoffeinsatz in schematischer dreidimensionaler Explosionsdarstellung der Schaltwalze in Figur 1;
- Figur 8: einen schematischen Längsschnitt durch ein weiteres Ausführungsbeispiel einer Schaltwalze;
- Figuren 9 a, b, c, d: zwei Segmentscheiben bzw. zwei Kunststoffeinsätze in schematischer dreidimensionaler Explosionsdarstellung der Schaltwalze in Figur 8 und
- Figur 10: einen Detailausschnitt der Figur 2 im Bereich der Aufnahme eines der Schaltstifte.

### Beschreibung der Zeichnungen

Gleiche oder einander entsprechende Teile sind in den Figuren jeweils mit gleichen bzw. entsprechenden Bezugszeichen versehen.

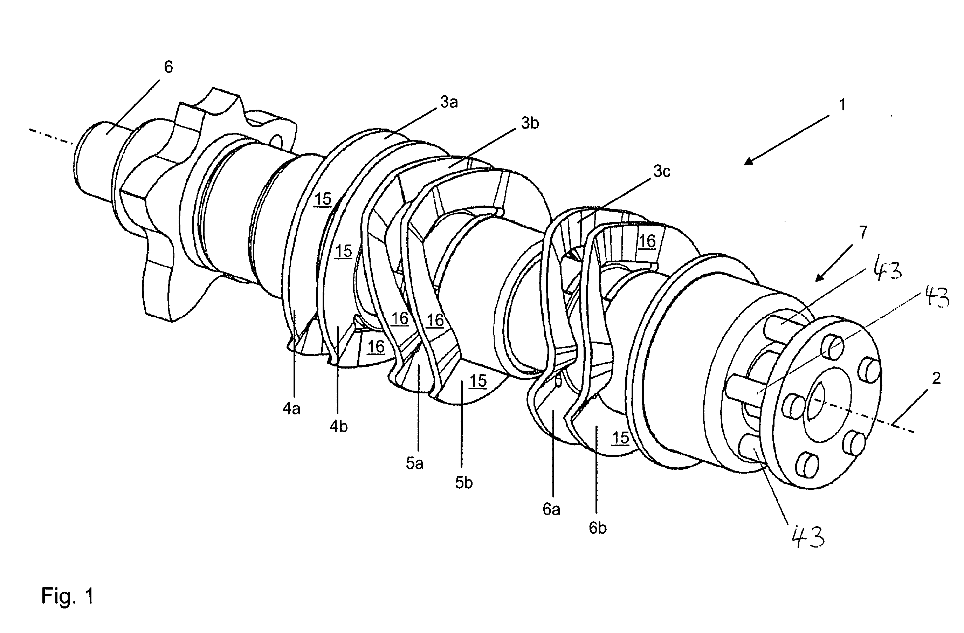

Figur 1 - Die Figur 1 zeigt eine Schaltwalze 1 zur Übertragung von Schaltbewegungen zu einem Getriebe, wie sie z.B. in einem Motorrad einsetzbar ist, als ein Ausführungsbeispiel der Erfindung.

Die Schaltwalze 1 ist zur Umsetzung von Dreh- oder Schwenkbewegungen um ihre eigene Achse 2 in eine Linearbewegung von einem oder mehreren nicht dargestellten Mitnehmerelementen ausgebildet. Hierzu weist die dargestellte Schaltwalze 1 drei Kurvenbahnen 3 a, b, c, welche jeweils durch zwei Führungsrippen 4 a, b, 5 a, b und 6 a, b gebildet werden auf. Die Führungsrippenpaare 4 a, b; 5 a, b; 6 a, b, bilden jeweils gemeinsam eine Führungsnut, in der nicht dargestellte Mitnehmerelemente entlang der Kurvenbahnen 3 a, b, c geführt bzw. zwangsgeführt werden. Die Kurvenbahnen 3 a, b, c sind zumindest abschnittsweise umlaufend um die Schaltwalze 1 bzw. Achse 2 ausgebildet und sind in der axialen Erstreckung der Schaltwalze 1 konturiert oder mit wechselndem Höhenverlauf ausgebildet.

An einem freien Ende der Schaltwalze 1 ist ein Lagerzapfen 6 angeordnet, an dem gegenüberliegenden freien Ende zeigt die Schaltwalze 1 eine Schaltstiftanordnung 7, über die Schaltbewegungen in die Schaltwalze 1 eingeleitet werden können. Die Schaltwalze 1 ist über den Lagerzapfen bzw. die Mantelfläche der Schaltstiftanordnung 7 in einem nicht dargestellten Schaltgehäuse gelagert.

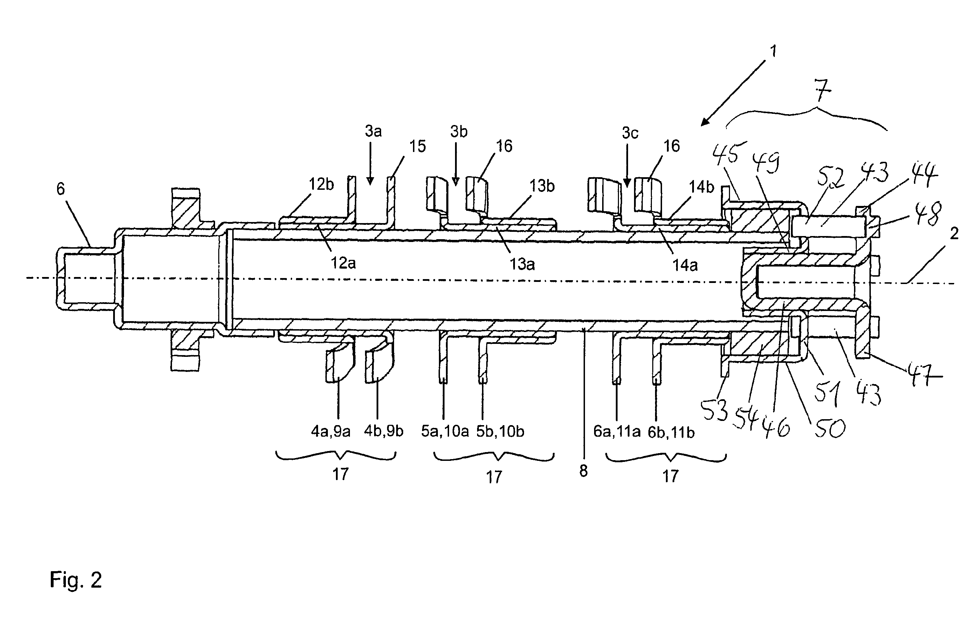

Figur 2 - Der innere Aufbau der Schaltwalze 1 ist am besten anhand des schematischen Längsschnitts durch die Schaltwalze 1 gemäß Figur 2 zu erläutern. Die Schaltwalze 1 weist einen rohrförmigen Walzenabschnitt 8 auf, welcher mit einem konstanten Querschnitt und/oder Querschnittprofil ausgebildet ist und an dessen einem Ende der Lagerzapfen 6, welcher als ein Umformteil realisiert ist, aufgesetzt und befestigt ist. An der gegenüberliegenden Seite ist dagegen die Schaltstiftanordnung 7 eingepresst, welche ebenfalls Umformteile aufweist. Auf einen Zwischenbereich des Walzenabschnitts 8 sind die Führungsrippen 4 a, b, 5 a, b, 6 a, b angeordnet.

Die Führungsrippen 4 a, b, 5 a, b, 6 a, b sind jeweils Teil eines Führungsrippenaufsatzes 9 a, b, 10 a, b bzw. 11 a, b. Der Führungsrippenaufsatz 9 a, b, 10 a, b, 11 a, b ist als ein Umformteil realisiert, welches neben der Führungsrippe 4 a, b, 5 a, b, 6 a, b einen rohr- oder stutzenförmigen Befestigungsvorsprung 12 a, b, 13 a, b, 14 a, b, aufweist, der einstückig an die jeweilige Führungsrippe 4 a, b, 5 a, b, 6 a, b angeformt ist. Der Befestigungsvorsprung 12 a, b, 13 a, b, 14 a, b ist bevorzugt durch Kragenziehen während des Umformvorganges gebildet. Jede Führungsrippe 4 a, b, 5 a, b, 6 a, b kann in Umlaufrichtung in zwei Bereiche unterteilt werden, nämlich in einen Ebenenabschnitt 15 und in einen Verformabschnitt 16. Im Bereich des Ebenenabschnitts 15 verläuft die Kurvenbahn 3 a, b bzw. c in einer konstanten axialen Höhe in Bezug auf die Achse 2. Im Bereich des Verformabschnitts 16 ist die Führungsrippe 4 a, b, 5 a, b, 6 a, b in der axialen Höhe mit mindestens einem Minimum und mindestens einem Maximum ausgebildet, so dass das nicht gezeigte Mitnehmerelement bei einer Schwenkung der Schaltwalze 1 um die Achse 2 in der axialen Position verschoben wird.

Im Bereich des Verformabschnitts 16 ist zwischen der Führungsrippe 4 a, b, 5 a, b, 6 a, b und dem Befestigungsvorsprung 12 a, b, 13 a, b, 14 a, b jeweils eine oder zwei Aussparungen vorgesehen, welche die Fertigung der Führungsrippenaufsätze 9 a, b, 10 a, b, 11 a, b erleichtern. Die Aussparungen sind so angeordnet, dass Bereiche, welche ansonsten einen maximalen oder sehr hohen Streckgrad aufweisen würden, ausgespart sind.

Figur 2 - Wie sich ebenfalls aus der Figur 2 sehr gut ableiten lässt, sind die Befestigungsvorsprünge 12 a, b, 13 a, b, 14 a, b von Führungsrippenaufsätzen 9 a, b, 10 a, b, 11 a, b, welche gemeinsam eine Kurvenbahn 3 a, b bzw. c, bilden, jeweils in radialer Richtung überlappend angeordnet. Insbesondere sind die Befestigungsvorsprünge 12 a, b, 13 a, b, 14 a, b so angeordnet, dass sich der jeweils radial äußere Befestigungsvorsprung 12b, 13b, 14b ausschließlich an dem radial inneren Befestigungsvorsprung 12a, 13a, bzw. 14a abstützt. Der radial äußere Befestigungsvorsprung 12b, 13b, 14b ist mit dem radial inneren Befestigungsvorsprung 12a, 13a, bzw. 14a reib-, stoff- und/oder kraftschlüssig verbunden, so dass diese gemeinsam eine Führungsrippenanordnung 17 bilden.

Genauer betrachtet weisen die radial inneren Befestigungsvorsprünge 12a, 13a, bzw. 14a jeweils außenseitig eine Zylindermantelfläche auf, auf der jeweils der zugeordnete Befestigungsvorsprung 12 a, b bzw. c mit einer nach innen gerichteten Zylindermantelfläche in Anlage kommt. Damit sind die Befestigungsvorsprünge paarweise ineinander gesteckt und/oder verschachtelt und/oder konzentrisch und/oder koaxial zueinander positioniert. Wie sich aus dem Längsschnitt ergibt, schließen die Befestigungsvorsprünge 12 a, b, 13 a, b, 14 a, b, welche jeweils in einer gemeinsamen Führungsrippenanordnung 17 angeordnet sind, an deren freien Ende in axialer Richtung in etwa bündig ab. Der jeweils radial innere Befestigungsvorsprung 12a, 13a, bzw. 14a ist in der axialen Erstreckung länger ausgebildet als der dazu korrespondierende äußere Befestigungsvorsprung 12b, 13b, 14b.

Die Führungsrippenanordnung 17 ist als eine separate Baueinheit derart ausgebildet, dass deren Führungsrippenaufsätze 9 a, b, 10 a, b, 11 a, b bereits vor der Montage auf dem Walzenabschnitt 8 miteinander verbunden sind. Dies hat den Vorteil, dass die Führungsrippenaufsätze 9 a, b, 10 a, b, 11 a, b zueinander sehr genau positioniert und vorgefertigt werden können und als Module auf dem Walzenabschnitt 8 aufgesetzt werden können, so dass Fertigungskosten erspart und zugleich Fertigungsgenauigkeiten verbessert werden können. Die Verbindung der Führungsrippenaufsätze 9 a, b, 10 a, b, 11 a, b kann beispielsweise durch Schweißen, Toxen, Umformen, etc. ausgebildet sein.

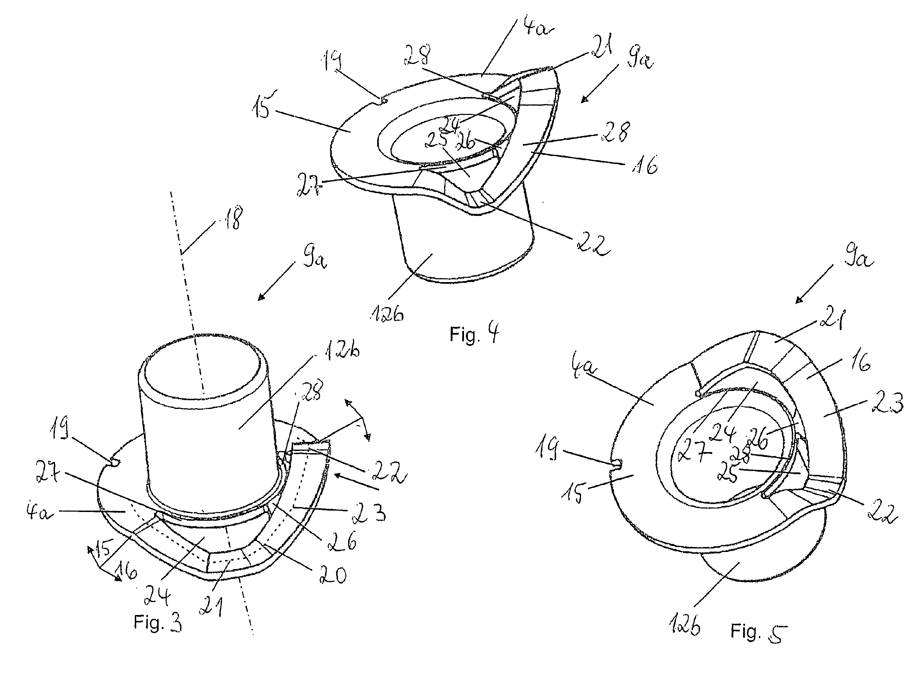

Figuren 3, 4 und 5 - Die Figuren 3, 4, und 5 zeigen den einstückigen Führungsrippenaufsatz 9a beispielhaft auch für die anderen Führungsrippenaufsätze 9b, 10 a, b und 11 a, b als Einzelteil in jeweils anderen Darstellungen, so dass verdeckte Details ersichtlich sind.

Der Führungsrippenaufsatz 9a weist einen Befestigungsvorsprung 12b auf, welcher sich bezüglich einer Dreh- bzw. Schwenkachse 18 in einer axialen Richtung erstreckt. Der Befestigungsvorsprung 12b ist als Rohr- oder Stutzenabschnitt ausgebildet und zur Aufnahme auf einem zylinderförmigen Walzenabschnitts der nicht gezeigten Schaltwalze realisiert.

Der Führungsrippenaufsatz 9a ist aus einer metallischen Platine, insbesondere einem Stahlblech, mittels einer Verfahrensfolge Trennen - Umformen gebildet. Der Befestigungsvorsprung 12b wird beispielsweise durch Kragenziehen geformt. Der Befestigungsvorsprung 12b hat bei der beispielhaften Ausführungsform eine axiale Länge, welche kleiner als der maximale Durchmesser des Führungsrippenaufsatzes 9a, jedoch größer als der freie Innendurchmesser des Befestigungsvorsprungs 12b ausgebildet ist.

An einem Ende des Befestigungsvorsprungs 12b ist eine Führungsrippe 4a angeformt, welche sich in einem Ebenenabschnitt 15 und einem Verformabschnitt 16 aufteilt. Der Ebenenabschnitt 15 erstreckt sich circa über 200 Grad in Umlaufrichtung um die Dreh- bzw. Schwenkachse 18 in einer Radialebene senkrecht zu der Dreh- bzw. Schwenkachse 18. Bevorzugt repräsentiert der Ebenenabschnitt 15 einen unverformten Bereich der ursprünglichen Blechplatine. Zur Erleichterung der Montage weist die Führungsrippe 4a im Bereich des Ebenenabschnitts 15 eine Justagekerbe 19 auf.

Der Verformabschnitt 16 der Führungsrippe 4a weist in Umlaufrichtung einen in axialer Höhe variierenden Verlauf auf, so dass eine Kurvenbahn 20 gebildet wird, welche -beispielsweise in Abwicklung betrachtet - ein Minimum 21 und ein Maximum 22 zeigt. Bei anderen Ausführungsbeispielen können auch mehr oder weniger Extrema vorgesehen sein. In dem Verlauf der Kurvenbahn 20 befindet sich zwischen dem Minimum 21 und dem Maximum 22 ein Wendepunkt 23, in dem sich das Vorzeichen der Krümmung der Kurvenbahn 20 ändert.

In einem radialen Bereich zwischen dem Minimum 21 und dem Maximum 22 des Verformabschnitts 16 der Führungsrippe 4a einerseits und dem Befestigungsvorsprung 12b anderseits sind jeweils eine Aussparung 24 beziehungsweise 25 angeordnet, welche in Umlaufrichtung durch einen Stützsteg 26 voneinander getrennt sind. Die Aussparung 24 beziehungsweise 25 verläuft über einen Winkelbereich in Umlaufrichtung von mindestens 50°, vorzugsweise mindestens 70°, wobei die Erstreckung in radialer Richtung in einer Projektion auf einer Radialebene zu der Dreh- bzw. Schwenkachse 18 kleiner als die Erstreckung in Umlaufrichtung ist. Die Aussparung 24 beziehungsweise 25 wird erzeugt, indem vor der umformtechnischen Fertigung des Verformabschnitts 16 eine Trennkontur in die ursprünglich ebene Blechplatine oder ein Zwischenprodukt eingebracht wird. Die Trennkontur kann als eine einfache, beispielsweise in Umlaufrichtung verlaufende Trenn- beziehungsweise Schnittlinie ausgebildet sein, bei anderen Beispielen kann die Trennkontur im Verlauf eine beliebige Form einnehmen, insbesondere kann die Trennkontur mindestens zwei Kurvenabschnitte aufweisen, welche einen unterschiedlichen Krümmungsmittelpunkt und/oder Krümmungsradius zeigen.

Der Nutzen der Trennkontur und der daraus resultierenden Aussparungen 24 beziehungsweise 25 liegt darin, dass während des Umformvorgangs zur Formung des Verformabschnitts 16 der Materialfluss maßgeblich in Umlaufrichtung und/oder entlang der Kurvenbahn 20 und nur zu einem geringeren Maße in radialer Richtung erfolgt. Insbesondere werden Bereiche mit einem sehr hohen Streckgrad, in denen der Materialfluss in radialer Richtung verläuft, zwischen Verformabschnitt 16 und Befestigungsvorsprung 12b ausgespart. Durch das Einbringen der Aussparung 24 und 25 wird demgemäß erreicht, dass ein Reißen des Bauteils 9a während des Umformvorgangs in Bereichen, welche ohnehin für die Funktionalität nicht notwendig sind, vermieden wird.

Der Stützsteg 26 ist bei diesem Ausführungsbeispiel im Bereich des Wendepunkts 23 angeordnet, wobei der Stützsteg 26 nur in einem geringen Maße in radialer Richtung verformt wird, sondern eher um eine radial verlaufende Achse gedreht wird. Dies wird dadurch erreicht, dass der Stützsteg 26 in einem Bereich an dem Verformabschnitt 16 angeformt ist, welcher sich in axialer Höhe in etwa in der Höhe des Ebenenabschnitts 15 befindet beziehungsweise diese schneidet. Um eine Fixierung des Führungsrippenaufsatzes 9a beziehungsweise dessen vorhergehendes Zwischenprodukt in dem Umformwerkzeug zu erreichen weist der Führungsrippenaufsatz 9a einen Umlaufsteg 27 bzw. 28 auf, welche in der gleichen axialen Höhe wie der Ebenenabschnitt 15 angeordnet sind. Der Umlaufsteg 27 beziehungsweise 28 erstreckt sich über die maximale Erstreckung der Aussparung 24 beziehungsweise 25 und weist in radialer Richtung eine Breite auf, welche deutlich geringer als die Breite des Verformabschnitts 16 und/oder des Ebenenabschnitts 15 in radialer Richtung ausgebildet ist.

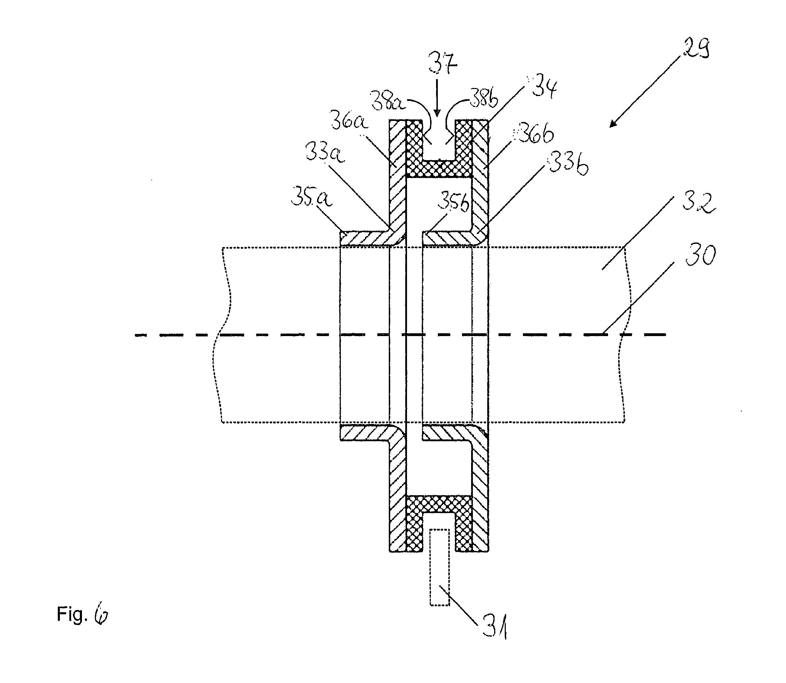

Figur 6 - Die Figur 6 zeigt in einer schematischen Längsschnittdarstellung eine Schaltwalze 29, welche ausgebildet ist, durch eine Drehung oder Verschwenkung um deren Längsachse 30 einen nur gestrichelt dargestellten Mitnehmerelement 31 in axialer Richtung, also in Richtung oder Gegenrichtung der Längsachse 30 zu verschieben.

Die Schaltwalze 29 bildet ein Zwischenglied zur Übertragung von Schalt- bzw. Wählbewegungen, insbesondere von einem Fuß- oder Handschalthebels eines Motorrads zu einem Getriebe des Motorrads.

Die Schaltwalze 29 weist einen nur schematisch dargestellten Walzenabschnitt 32 auf, welcher aus Metall ausgebildet ist und auf dem zur Bildung einer Kurvenbahn zur Führung des Mitnehmerelements 31 eine Baugruppe bestehend aus zwei Führungsrippenaufsätzen 33a, 33b und einem Kunststoffeinsatz 34 angeordnet sind, wobei die Führungsrippenaufsätze 33 a, b den Kunststoffeinsatz 34 in axialer Richtung beidseitig haltend tragen. Optional weist die Schaltwalze 29 eine Mehrzahl derartiger Baugruppen auf, welche zueinander in axialer Richtung und in Umlaufrichtung versetzt bzw. verdreht angeordnet sind.

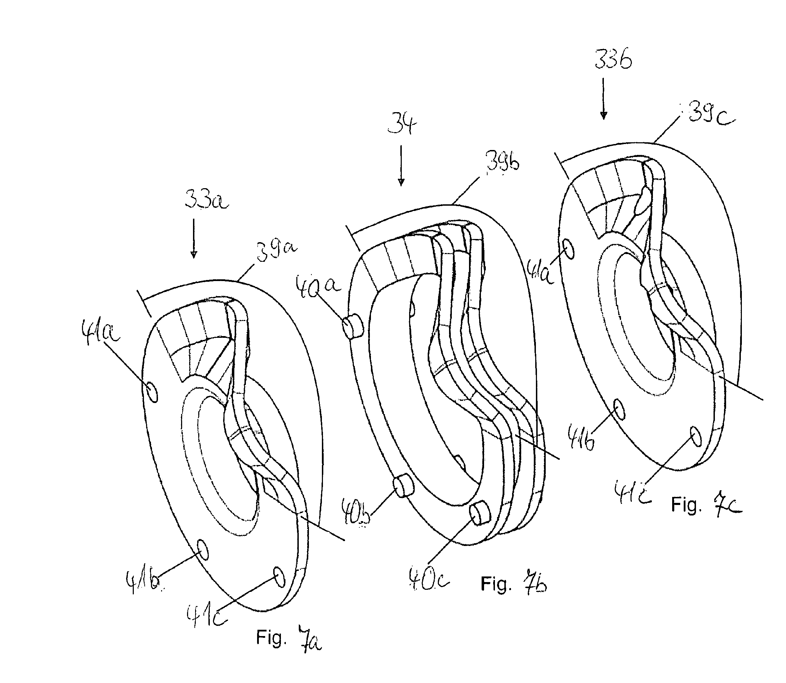

Die Führungsrippenaufsätze 33 a, b bestehen aus einem metallischen Werkstoff und weisen einen rohrähnlich auskragenden Stutzen 35 a, 35 b (Befestigungsvorsprünge) auf, welche jeweils einen freien Innendurchmesser zur Aufnahme des Walzenabschnitts 32 aufweisen. Die Führungsrippenaufsätze 33 a, b und der Walzenabschnitt 32 sind miteinander bevorzugt stoffschlüssig verbunden. In radialer Richtung erstrecken sich Führungsrippen 36 a, 36 b, welche die Kontur der Kurvenbahn tragen, wie nachfolgend noch im Zusammenhang mit den Figuren 7 a bis c erläutert wird. Zwischen den Führungsrippenaufsätzen 33a und b ist der Kunststoffeinsatz 34 angeordnet und formschlüssig gehalten. Der Kunststoffeinsatz 34 ist als ein geschlossener Ring ausgebildet und weist eine Schaltnut 37 auf, welche zumindest abschnittsweise um den Walzenabschnitt 32 in Umlaufrichtung verläuft. Die Schaltnut 37 weist in dem gezeigten Längsschnitt einen rechteckigen freien Querschnitt auf, in dem das Mitnehmerelement 31 in axialer Richtung geführt wird.

Figur 6 - Bei der in der Figur 6 gezeigten Ausführungsform ist der freie Innendurchmesser des Kunststoffeinsatzes 34 größer ausgebildet als der Außendurchmesser des Stutzens 35 b was zu einer zusätzlichen Materialersparnis führt. Bei alternativen Ausführungsformen kann der Kunststoffeinsatz 34 auch formschlüssig in radialer Richtung auf dem Walzenabschnitt 32 oder dem Stutzen 35 b aufliegen. Da der Kunststoffeinsatz 34 maßgeblich Kräfte in axialer Richtung aufnimmt, ist die gezeigte Abstützung ausreichend.

Durch die Seitenwände der Schaltnut 37 werden zwei Kunststoffführungsflächen 38 a, 38 b definiert, welche radial orientiert sind und die eigentliche Führung des Mitnehmers 31 in axialer Richtung übernehmen.

Bei der vorliegenden Konstruktion wird die Kurvenbahn für den Mitnehmer 31 mit einer höheren Präzision bei zugleich günstigen Fertigungskosten in dem Kunststoffeinsatz 34 dargestellt, wohingegen die Funktion der Führungsrippenaufsätze 33 a, b sich auf eine Haltefunktion des Kunststoffeinsatzes 34 beschränkt.

Figuren 7a, 7b, 7c - Die Figuren 7 a, b, c zeigen in einer schematischen dreidimensionalen Explosionsdarstellung die in der Figur 6 auf die Schaltwalze 29 aufgesetzte Baugruppe bestehend aus den Führungsrippenaufsätzen 33 a, 33 b und dem Kunststoffeinsatz 34. In Umlaufrichtung betrachtet weisen sowohl die Führungsrippenaufsätze 33 a, b, als auch der Kunststoffeinsatz 34 einen in axialer Richtung an- bzw. absteigenden Kurvenabschnitt 39 a, 39 b und 39 c auf, welcher jeweils parallel oder zumindest gleichorientiert zu der Kurvenbahn für das Mitnehmerelement 31 ausgebildet sind. Die eigentliche Kurvenbahn zur Führung des Mitnehmerelements 31 wird jedoch durch die Schaltnut 37 in dem Kunststoffeinsatz 6 gebildet.

Durch die Übernahme der Kontur der Kurvenbahn auf die Führungsrippenaufsätze 33 a, b können mehrere Baugruppen sehr platzsparend nebeneinander arrangiert werden, indem die Kurvenabschnitte 39 a, b, c der einzelnen Baugruppen zueinander in Umlaufrichtung versetzt angeordnet werden. Des Weiteren wird der Kunststoffeinsatz 34 hinsichtlich von Kräften, welche in Umfangsrichtung wirken, formschlüssig gehalten.

Als Befestigungsmittel zur Befestigung des Kunststoffeinsatzes 34 zwischen den Führungsrippenaufsätzen 33 a, b weist der Kunststoffeinsatz 34 eine Mehrzahl von angeformten Stiften 40 auf, welche jeweils in korrespondierende Aufnahmen, insbesondere Durchgangslöcher 41 der Führungsrippenaufsätze 33 a, b aufgenommen werden.

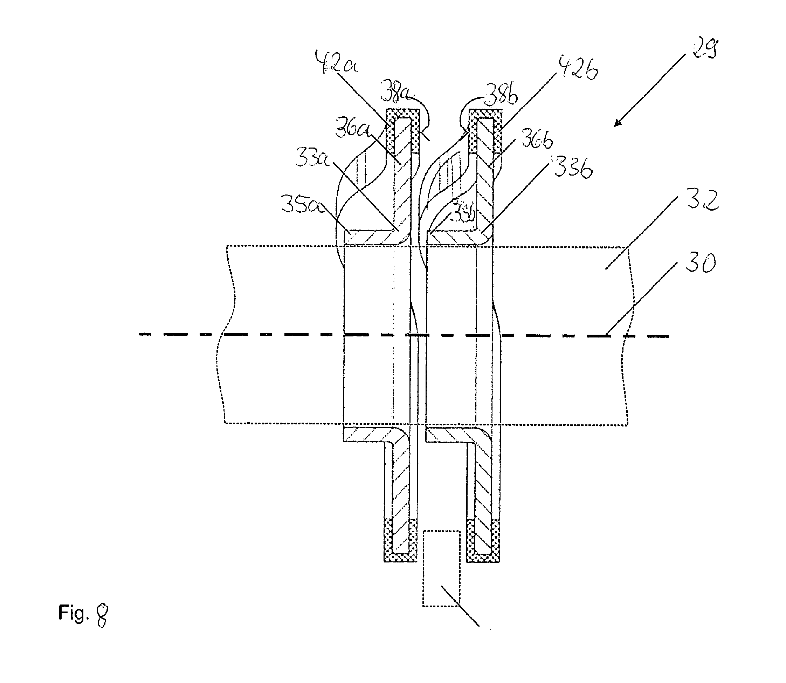

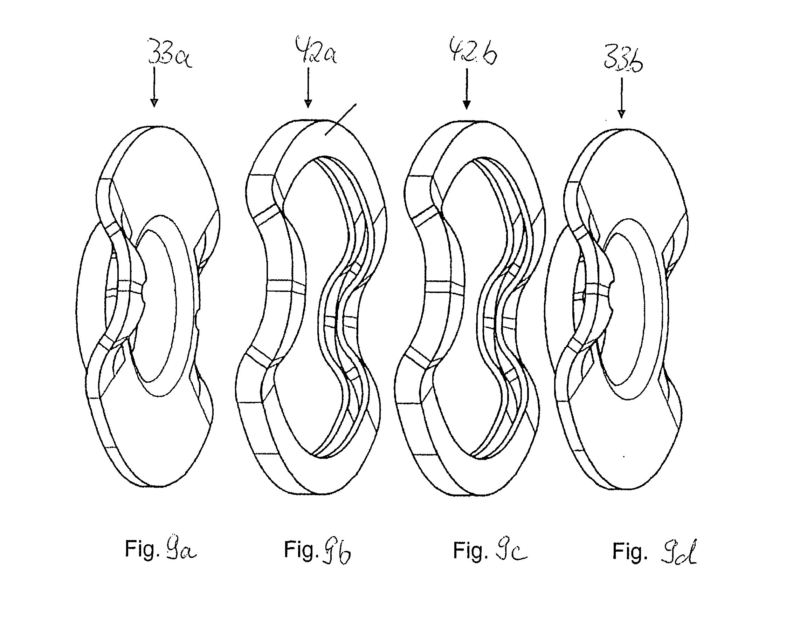

Figur 8 - Die Figur 8 zeigt eine Abwandlung der Schaltwalze 29 in der Figur 1 als ein zweites Ausführungsbeispiel der Erfindung. Die Figuren 9 a, b, c, d zeigen die Baugruppe, welche in der Figur 8 auf den Walzenabschnitt 32 der Schaltwalze 29 aufgesetzt ist, in einer schematischen, dreidimensionalen Explosionsdarstellung. Im Vergleich zu dem ersten Ausführungsbeispiel sind bei dem zweiten Ausführungsbeispiel zwar die Führungsrippenaufsätze 33 a, b (bis auf die Durchgangslöcher 41) analog bzw. ähnlich wie in den vorhergehenden Figuren ausgebildet, zur Beschreibung der Führungsrippen wird daher auf die vorhergehenden Figuren verwiesen. Als wesentlicher Unterschied zeigt die Schaltwalze 29 in der Figur 8 statt eines einzigen Kunststoffeinsatzes zwei getrennte Kunststoffeinsätze 42 a, 42 b, wobei jeweils ein Kunststoffeinsatz 14a bzw. 14 b einer der beiden Führungsrippenaufsätzen 33 a, b zugeordnet ist.

Jeder der Kunststoffeinsätze 42 a, b ist ringartig und bevorzugt in Umlaufrichtung geschlossen ausgebildet und jeweils über den radialen Randbereich der zugeordneten Führungsrippenaufsätze 33 a bzw. 33b gestülpt. Alternativ oder ergänzend können die Kunststoffeinsätze 42 a, b auch an einer Stelle gesprengt sein, um eine Montage zu erleichtern.

Figur 8 - In der in der Figur 8 gezeigten Längsschnittdarstellung zeigen die Kunststoffeinsätze 42 a, b eine u-förmige Gestalt, wobei durch den freien Innenraum des Us die Randbereiche der Führungsrippenaufsätze 33 a, b aufgenommen sind, so dass die Kunststoffeinsätze 42 a, b formschlüssig auf den Führungsrippenaufsätzen 33 a, b sitzen. Die zueinander gewandten Seitenflächen der Kunststoffeinsätze 42 a, 42 b bilden - analog wie bei dem ersten Ausführungsbeispiel - Kunststoffführungsflächen 38 a bzw. 38 b, welche im Sinne eines Führungskanals zur seitlichen Führung des gestrichelt dargestellten Mitnehmers 31 entlang der Kurvenbahn ausgebildet sind.

Figuren 9a - 9d - Wie sich insbesondere aus den Figuren 9a bis d ergibt zeigen die Führungsrippenaufsätze 33 a, b sowie die Kunststoffeinsätze 42 a, 42 b jeweils diametral gegenüberliegende Kurvenbahnabschnitte welche Steigungen in axialer Richtung aufweisen.

Figur 9a - 9d - Bei abgewandelten Ausführungsformen der Erfindung ist pro Baugruppe nur eine Segmentscheibe vorgesehen, auf der ein Kunststoffeinsatz analog ausgebildet zu den Ausführungsformen in der Figur 9 b bzw. 9 c aufgesetzt, wobei das Mitnehmerelement 31 als ein gabelähnlicher Mitnehmer ausgebildet ist, welcher sich beidseitig an dem Kunststoffeinsatz 42 a, b abstützt, so dass der Kunststoffeinsatz 42 a bzw. 42 b einen Führungssteg bildet.

Figur 1 - An dem dem Lagerzapfen 6 gegenüberliegenden freien Ende zeigt die Schaltwalze 1 den Schaltstiftabschnitt 7, welcher mehrere - in diesem Beispiel fünf - Schaltstifte 43 aufweist. Die Schaltstifte 43 sind auf einem gemeinsamen Teilkreis und in Umlaufrichtung um die Achse 2 äquidistant angeordnet, parallel zur axialen Erstreckung der Achse 2 ausgerichtet und weisen einen kreisrunden Querschnitt auf. Der Schaltstiftabschnitt 7 dient zur Einleitung einer Schaltbewegung in die Schaltwalze 1, wobei beispielsweise mit einem hakenförmigen Element in die Schaltstifte 43 eingegriffen wird und die Schaltwalze 1 über die Schaltstifte 43 um die Achse 2 verschwenkt wird.

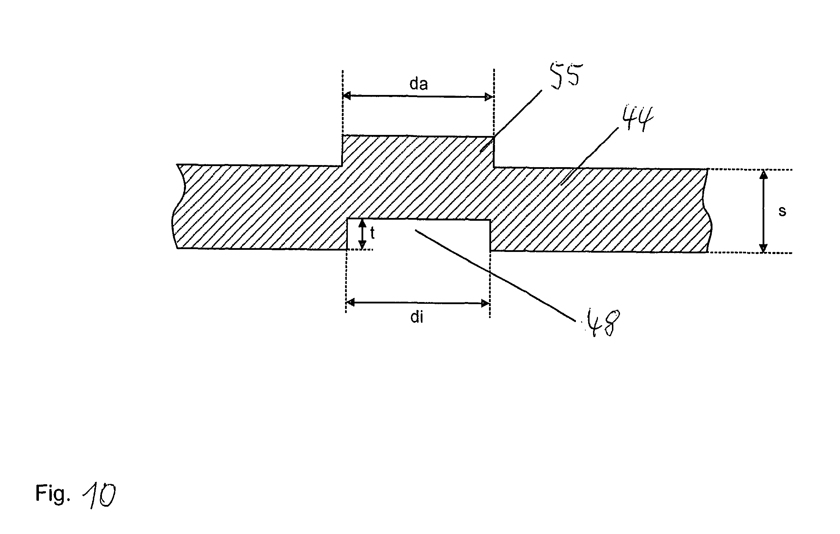

Der Schaltstiftabschnitt 5 ist auf den Walzenabschnitt 8 aufgesetzt bzw. aufgepresst. Der Schaltstiftabschnitt 5 umfasst ein erstes Haltebauteil 44 und ein zweites Haltebauteil 45, zwischen denen die Schaltstifte 43 angeordnet und befestigt sind. Das erste Haltebauteil 44 ist als ein im Querschnitt napfförmiges Umformteil ausgebildet, welches beispielsweise aus einer Blechplatine erzeugt wurde. Es weist einen Napfabschnitt 46 auf, welcher eine zylindermantelförmige Außenfläche trägt. An dem offenen Ende des Napfabschnitts 46 schließt sich ein in einer Radialebene zu der Achse 2 erstreckender Kragen 47 an, in den Aufnahmeumformungen 48 eingebracht sind, welche sacklochartig ausgebildet sind, und die zur Aufnahme der Schaltstifte 43 ausgebildet sind. Zur genauen Ausgestaltung der Aufnahmeumformbereiche 48 wird auf die spätere Erläuterung zu der Figur 10 verwiesen.

Das zweite Haltebauteil 10 weist zwei Zylindermantelabschnitte 49 und 50 auf, welche zueinander konzentrisch und/oder koaxial angeordnet sind und die über einen Kreisringabschnitt 51 einstückig miteinander verbunden sind, welcher in einer Radialebene zu der Achse 2 ausgerichtet ist. Der innere Zylindermantelabschnitt 49 ist vom Innendurchmesser an den Außendurchmesser des Napfabschnitts 46 derart angepasst, dass dieser eingeschoben oder eingepresst werden kann. Optional ergänzend können erstes und zweites Haltebauteil 44 und 45 miteinander form- oder stoffschlüssig verbunden werden.

Der Kreisringabschnitt 51 weist Durchgangsöffnungen 52 auf, welche im Durchmesser dem Außendurchmesser der Schaltstifte 43 entsprechen und diese formschlüssig und/oder passgenau aufnehmen. Durch die Durchgangsöffnungen 52 werden die Schaltstifte 43 in ihrer radialen Lage definiert.

Der äußere Zylindermantelabschnitt 50 weist an der radialen Außenseite eine Lauffläche für ein Lager, insbesondere ein Wälz- oder Gleitlager auf, sodass die Schaltwalze 1 über den Lagerstummel 4 und den äußeren Zylindermantelabschnitt 50 in einem nicht dargestellten Gehäuse gelagert wird. An dem freien Ende des Zylindermantelabschnitts 51 schließt sich noch ein in radialer Richtung auskragender Abschlusskragen 53 an. Das zweite Haltebauteil 45 wird unter Nutzung eines Zwischenelements 54 in Form einer Hülse auf den Walzenabschnitt 8 aufgesetzt bzw. aufgepresst und mit diesem fest verbunden.

Die Fixierung der Schaltstifte 43 in axialer Richtung an der dem ersten Haltebauteil abgewandten Endabschnitt erfolgt durch die Stirnseite des Walzenabschnitts 8 und/oder durch das Zwischenstück 54, welche gemeinsam oder bei anderen Ausführungsformen separat einen axialen Endanschlag für die Schaltstifte 43 bilden, sodass deren Lage endgültig definiert ist.

Der Schaltstiftabschnitt 7 kann als eine separat vormontierte Baueinheit auf den Walzenabschnitt 8 aufgesetzt bzw. aufgepresst werden. Betrachtet man die Gesamtzusammenstellung der Schaltwalze 1, so werden ausgehend von dem rohrförmigen Walzenabschnitt 8 zum einen die Führungsrippenaufsätze 9a - 11 b, der Lagerzapfen 6 und der Schaltstiftabschnitt 7 aufgesetzt, sodass eine sehr einfache Montage möglich ist.

Die Figur 3 zeigt in einer stark schematisierten Darstellung einen Detailausschnitt im Bereich der Aufnahmeumformung 48 zur Aufnahme der Schaltstifte 43 in dem ersten Haltebauteil 44. Der Aufnahmeumformbereich 48 wird durch einen stanzähnlichen Vorgang eingebracht, wobei der Aufnahmedurchmesser di in etwa dem Durchmesser der Schaltstifte 43 entspricht. Durch den stanzähnlichen Vorgang entsteht auf der dem Schaltstift 43 abgewandten Seite des ersten Haltebauteils 44 ein Abrissabschnitt 55, welcher im Außendurchmesser da im Wesentlichen den gleichen Durchmesser wie der freie Aufnahmedurchmesser di aufweist. Insbesondere ist die Differenz zwischen Außendurchmesser da und Aufnahmedurchmesser di kleiner als die Blechdicken s des ersten Haltebauteils 44. Die Tiefe t der Aufnahmeumformung 48 entspricht in etwa der Hälfte der Blechdicke s.

Der Vorteil der Verwendung von Aufnahmeumformungen 48 liegt vor allem darin, dass in einem einzigen Arbeitsschritt für alle fünf Schaltstifte 43 die Aufnahmen eingeformt und damit sehr präzise relativ zueinander eingebracht werden können, ohne das erste Haltebauteil 44 in unzulässiger Weise zu verformen.

### Bezugszeichenliste

- 1: Schaltwalze
- 2: Achse
- 3 a, b, c: Kurvenbahn
- 4 a, b, 5 a, b, 6 a, b: Führungsrippen
- 6: Lagerzapfen
- 7: Schaltstiftanordnung
- 8: Walzenabschnitt
- 9 a , b, 10 a, b, 11 a, b: Führungsrippenaufsatz
- 12 a, b, 13 a, b, 14 a, b: Befestigungsvorsprung
- 15: Ebenenabschnitt
- 16: Verformabschnitt
- 17: Führungsrippenanordnung
- 18: Dreh- bzw. Schwenkachse
- 19: Justagekerbe
- 20: Kurvenbahn
- 21: Minimum
- 22: Maximum
- 23: Wendepunkt
- 24: Aussparung
- 25: Aussparung
- 26: Stützsteg
- 27: Umlaufsteg
- 28: Umlaufsteg
- 29: Schaltwalze
- 30: Längsachse
- 31: Mitnehmerelement
- 32: Walzenabschnitt
- 33 a, b: Führungsrippenaufsatz
- 34: Kunststoffeinsatz
- 35 a, b: Stutzen
- 36 a, b: Führungsrippe
- 37: Schaltnut
- 38 a, b,: Kunststoffführungsfläche
- 39 a, b, c: Kurvenabschnitt
- 40 a, b, c: Stift
- 41 a, b, c: Durchgangslöcher
- 42 a, b,: Kunststoffeinsatz
- 43: Schaltstifte
- 44: erstes Haltebauteil
- 45: zweites Haltebauteil
- 46: Napfabschnitt
- 47: Kragen
- 48: Aufnahmeumformung
- 49: innerer Zylindermantelabschnitt
- 50: äußerer Zylindermantelabschnitt
- 51: Kreisringabschnitt
- 52: Durchgangsöffnung
- 53: Endkragen
- 54: Zwischenelement
- 55: Abrissabschnitt

## Patentansprüche

1. Schaltwalze mit einer Führungsrippenanordnung (17) mit einem ersten und einem zweiten Führungsrippenaufsatz (9 a, b, 10 a, b, 11 a, b), wobei der erste und der zweite Führungsrippenaufsatz (9 a, b, 10 a, b, 11 a, b) jeweils oder gemeinsam auf einem Walzenabschnitt (8, 32) eine Kurvenbahn (3a,b,c) für mindestens ein Mitnehmerelement (31) bilden, wobei der erste und der zweite Führungsrippenaufsatz (9 a, b, 10 a, b, 11 a, b, 33 a, b) jeweils als ein separates Bauteil ausgebildet sind, welche miteinander verbunden auf dem Walzenabschnitt (8, 32) aufgesetzt sind, wobei beide Führungsrippenaufsätze (9 a, b, 10 a, b, 11 a, b, 33 a, b) einen axial auskragenden Befestigungsvorsprung (12 a, b, 13 a, b, 14 a, b) aufweisen, welche zueinander koaxial und/oder konzentrisch angeordnet sind und die Führungsrippenaufsätze (9 a, b, 10 a, b, 11 a, b, 33 a, b) an den Walzenabschnitt (8, 32) anbinden, **dadurch gekennzeichnet, dass** die axiale Länge der Befestigungsvorsprünge (12 a, b, 13 a, b, 14 a, b) kleiner ist als der maximale Durchmesser der Führungsrippenaufsätze (9 a, b, 10 a, b, 11 a, b, 33 a, b).

2. Schaltwalze nach Anspruch 1, **dadurch gekennzeichnet, dass** der erste und der zweite Führungsrippenaufsatz (9 a, b, 10 a, b, 11 a, b, 33 a, b) zumindest abschnittsweise in einer radialen Richtung auf dem Walzenabschnitt (8, 32) überlappend angeordnet sind.

3. Schaltwalze nach Anspruch 1, **dadurch gekennzeichnet, dass** die Befestigungsvorsprünge (12 a, b, 13 a, b, 14 a, b) als rohr- oder stutzenartige Ausformungen ausgebildet sind, welche ineinander verschachtelt sind.

4. Schaltwalze nach Anspruch 1, **dadurch gekennzeichnet, dass** mindestens einer der Führungsrippenaufsätze (9 a, b, 10 a, b, 11 a, b) eine Führungsrippe (4 a, b, 5 a, b, 6 a, b) aufweist, wobei die Führungsrippe (4 a, b, 5 a, b, 6 a, b) in Umlaufrichtung einen Ebenenabschnitt (15) und einen Verformabschnitt (16) aufweist, welche eine Kurvenbahn (20) darstellen, wobei im Bereich des Verformabschnitts (16) zwischen der Führungsrippe (4 a, b, 5 a, b, 6 a, b) und dem Befestigungsvorsprung (12 a, b, 13 a, b, 14 a, b) mindestens eine Aussparung (24, 25) angeordnet ist.

5. Führungsrippenaufsatz für eine Schaltwalze nach Anspruch 4, **dadurch gekennzeichnet, dass** die Führungsrippe (4 a, b, 5 a, b, 6 a, b) durch eine Verfahrensfolge gebildet ist, die eine Erzeugung einer Trennkontur und eine nachfolgende Umformung umfasst, wobei durch die Umformung aus der Trennkontur die geschlossene Aussparung (24, 25) gebildet ist, welche in einem Übergangsbereich zwischen der Kurvenbahn (20) und dem Befestigungsvorsprung (12 a, b, 13 a, b, 14 a, b) angeordnet ist.

6. Führungsrippenaufsatz nach Anspruch 5, **dadurch gekennzeichnet, dass** die Trennkontur im Verlauf mindestens zwei Kurvenabschnitte aufweist, welche einen unterschiedlichen Krümmungsmittelpunkt zeigen.

7. Führungsrippenaufsatz nach Anspruch 5, **dadurch gekennzeichnet, dass** in der Führungsrippe (4 a, b, 5 a, b, 6 a, b) mindestens zwei derartige Aussparungen (24, 25) eingebracht sind, wobei die Aussparungen (24, 25) durch mindestens einen Stützsteg (26) getrennt sind.

8. Schaltwalze nach Anspruch 1, **dadurch gekennzeichnet, dass** mindestens einer der Führungsrippenaufsätze (33a, b) eine Führungsrippe (36a, b) aufweist, wobei die Führungsrippe (36a, b) eine Kunststoffführungsfläche (38a, b) aufweist, die auf einem Kunststoffeinsatz (34) ausgebildet ist, der auf wenigstens einer der Führungsrippen (36a, b) aufgesetzt ist.

9. Schaltwalze nach Anspruch 8, **dadurch gekennzeichnet, dass** zwei der Kunststoffführungsflächen (38a, b) gemeinsam einen Schalt- und/oder Wählkanal für das Mitnehmerelement (31) bilden.

10. Schaltwalze nach Anspruch 9, **dadurch gekennzeichnet, dass** die Kunststoffführungsflächen (38a, b) auf zwei separaten Kunststoffeinsätzen (42a, 42b) ausgebildet sind.

11. Schaltwalze nach Anspruch 9, **dadurch gekennzeichnet, dass** die Kunststoffführungsflächen (38a, b) an einem gemeinsamen Kunststoffeinsatz (34) ausgebildet sind.

12. Schaltwalze nach Anspruch 1, **dadurch gekennzeichnet, dass** die Schaltwalze (1) eine Mehrzahl von Schaltstiften (43) zur Einleitung der Schaltbewegung in die Schaltwalze (1) aufweist, wobei die Schaltstifte (43) mit wenigstens einem Endabschnitt in mindestens eine Aufnahmeumformung (48) eines Haltebauteils (44) aus Blech zumindest axial eingreifen.

13. Schaltwalze nach Anspruch 12, **dadurch gekennzeichnet, dass** die Aufnahmeumformung (48) als eine Prägung oder Stanzung ausgebildet ist.

## Claims

1. Gear-shifting drum having a guide rib arrangement (17) with a first and a second guide rib attachment (9 a, b, 10 a, b, 11 a, b), the first and the second guide rib attachment (9 a, b, 10 a, b, 11 a, b) forming, in each case or jointly, a cam track (3a, b, c) for at least one driver element (31) on a drum section (8, 32), the first and the second guide rib attachment (9 a, b, 10 a, b, 11 a, b, 33 a, b) being configured in each case as a separate component, which components, connected to one another, are placed on the drum section (8, 32), both guide rib attachments (9 a, b, 10 a, b, 11 a, b, 33 a, b) having an axially protruding fastening projection (12 a, b, 13 a, b, 14 a, b), which fastening projections (12 a, b, 13 a, b, 14 a, b) are arranged coaxially and/or concentrically with respect to one another and attach the guide rib attachments (9 a, b, 10 a, b, 11 a, b, 33 a, b) to the drum section (8, 32), **characterized in that** the axial length of the fastening projections (12 a, b, 13 a, b, 14 a, b) is smaller than the maximum diameter of the guide rib attachments (9 a, b, 10 a, b, 11 a, b, 33 a, b).

2. Gear-shifting drum according to Claim 1, **characterized in that** the first and the second guide rib attachment (9 a, b, 10 a, b, 11 a, b, 33 a, b) are arranged so as to overlap at least in sections in a radial direction on the drum section (8, 32).

3. Gear-shifting drum according to Claim 1, **characterized in that** the fastening projections (12 a, b, 13 a, b, 14 a, b) are configured as tubular or stub-like shaped-out formations which are nested inside one another.

4. Gear-shifting drum according to Claim 1, **characterized in that** at least one of the guide rib attachments (9 a, b, 10 a, b, 11 a, b) has a guide rib (4 a, b, 5 a, b, 6 a, b), the guide rib (4 a, b, 5 a, b, 6 a, b) having, in the circumferential direction, a flat section (15) and a deformation section (16) which constitute a cam track (20), at least one cut-out (24, 25) being arranged in the region of the deformation section (16) between the guide rib (4 a, b, 5 a, b, 6 a, b) and the fastening projection (12 a, b, 13 a, b, 14 a, b).

5. Guide rib attachment for a gear-shifting drum according to Claim 4, **characterized in that** the guide rib (4 a, b, 5 a, b, 6 a, b) is formed by a process sequence which comprises a production of a separation contour and subsequent shaping, the closed cut-out (24, 25) being formed from the separation contour by way of the shaping, which cut-out (24, 25) is arranged in a transitxon region between the cam track (20) and the fastening projection (12 a, b, 13 a, b, 14 a, b).

6. Guide rib attachment according to Claim 5, **characterized in that**, in its course, the separation contour has at least two cam sections which exhibit a different curvature centre point.

7. Guide rib attachment according to Claim 5, **characterized in that** at least two cut-outs (24, 25) of this type are made in the guide rib (4 a, b, 5 a, b, 6 a, b), the cut-outs (24, 25) being separated by at least one supporting web (26).

8. Gear-shifting drum according to Claim 1, **characterized in that** at least one of the guide rib attachments (33a, b) has a guide rib (36a, b), the guide rib (36a, b) having a plastic guide face (38a, b) which is formed on a plastic insert (34) which is placed on at least one of the guide ribs (36a, b).

9. Gear-shifting drum according to Claim 8, **characterized in that** two of the plastic guide faces (38a, b) together form a gear-shifting and/or gear-selecting channel for the driver element (31).

10. Gear-shifting drum according to Claim 9, **characterized in that** the plastic guide faces (38a, b) are formed on two separate plastic inserts (42a, 42b).

11. Gear-shifting drum according to Claim 9, **characterized in that** the plastic guide faces (38a, b) are formed on a common plastic insert (34).

12. Gear-shifting drum according to Claim 1, **characterized in that** the gear-shifting drum (1) has a plurality of gear-shifting pins (43) for introducing the gear-shifting movement into the gear-shifting drum (1), the gear-shifting pins (43) engaging at least axially with at least one end section into at least one receiving shaped portion (48) of a holding component (44) made from sheet metal.

13. Gear-shifting drum according to Claim 12, **characterized in that** the receiving shaped portion (48) is configured as a stamped portion or punched portion.

## Revendications

1. Tambour de sélection comprenant un agencement de nervures de guidage (17) comprenant un premier et un deuxième collet à nervures de guidage (9 a, b, 10 a, b, 11 a, b), le premier et le deuxième collet à nervures de guidage (9 a, b, 10 a, b, 11 a, b) formant chacun ou conjointement, sur une section du tambour (8, 32), un chemin courbe (3a, b, c) pour au moins un élément d'entraînement (31), le premier et le deuxième collet à nervures de guidage (9 a, b, 10 a, b, 11 a, b, 33 a, b) étant chacun réalisés sous forme de composant séparé, lesquels sont connectés l'un à l'autre et placés sur la section de tambour (8, 32), les deux collets à nervures de guidage (9 a, b, 10 a, b, 11 a, b, 33 a, b) présentant une saillie de fixation (12 a, b, 13 a, b, 14 a, b) faisant saillie axialement, lesquelles sont disposées coaxialement et/ou concentriquement l'une par rapport à l'autre et relient les collets à nervures de guidage (9 a, b, 10 a, b, 11 a, b, 33 a, b) à la section de tambour (8, 32), **caractérisé en ce que** la longueur axiale des saillies de fixation (12 a, b, 13 a, b, 14 a, b) est inférieure au diamètre maximal des collets à nervures de guidage (9 a, b, 10 a, b, 11 a, b, 33 a, b).

2. Tambour de sélection selon la revendication 1, **caractérisé en ce que** le premier et le deuxième collet à nervures de guidage (9 a, b, 10 a, b, 11 a, b, 33 a, b) sont disposés de manière à se chevaucher au moins en partie dans une direction radiale sur la section de tambour (8, 32).

3. Tambour de sélection selon la revendication 1, **caractérisé en ce que** les saillies de fixation (12 a, b, 13 a, b, 14 a, b) sont réalisées sous forme de formations de type tubulaire ou de type tubulure, qui sont emboîtées l'une dans l'autre.

4. Tambour de sélection selon la revendication 1, **caractérisé en ce qu'**au moins l'un des collets à nervures de guidage (9 a, b, 10 a, b, 11 a, b) présente une nervure de guidage (4 a, b, 5 a, b, 6 a, b), la nervure de guidage (4 a, b, 5 a, b, 6 a, b) présentant dans la direction périphérique une section plane (15) et une section déformée (16), lesquelles constituent un chemin courbe (20), au moins un évidement (24, 25) étant disposé dans la région de la section déformée (16) entre la nervure de guidage (4 a, b, 5 a, b, 6 a, b) et la saillie de fixation (12 a, b, 13 a, b, 14 a, b).

5. Collet à nervures de guidage pour un tambour de sélection selon la revendication 4, **caractérisé en ce que** la nervure de guidage (4 a, b, 5 a, b, 6 a, b) est formée par un déroulement de procédé qui comprend la production d'un contour de séparation et un formage subséquent, l'évidement fermé (24, 25) étant formé par le formage à partir du contour de séparation, lequel évidement est disposé dans une région de transition entre le chemin courbe (20) et la saillie de fixation (12 a, b, 13 a, b, 14 a, b).

6. Collet à nervures de guidage selon la revendication 5, **caractérisé en ce que** l'allure du contour de séparation présente au moins deux sections courbes qui présentent un centre de courbure différent.

7. Collet à nervures de guidage selon la revendication 5, **caractérisé en ce qu'**au moins deux évidements de ce type (24, 25) sont pratiqués dans la nervure de guidage (4 a, b, 5 a, b, 6 a, b), les évidements (24, 25) étant séparés par au moins une nervure de support (26).

8. Tambour de sélection selon la revendication 1, **caractérisé en ce qu'**au moins l'un des collets à nervures de guidage (33 a, b) présente une nervure de guidage (36a, b), la nervure de guidage (36a, b) présentant une surface de guidage en plastique (38a, b) qui est réalisée sur un insert en plastique (34) qui est placé sur au moins l'une des nervures de guidage (36a, b).

9. Tambour de sélection selon la revendication 8, **caractérisé en ce que** deux des surfaces de guidage en plastique (38a, b) forment ensemble un canal de commutation et/ou de sélection pour l'élément d'entraînement (31).

10. Tambour de sélection selon la revendication 9, **caractérisé en ce que** les surfaces de guidage en plastique (38a, b) sont réalisées sur deux inserts en plastique séparés (42a, 42b).

11. Tambour de sélection selon la revendication 9, **caractérisé en ce que** les surfaces de guidage en plastique (38a, b) sont réalisées sur un insert en plastique commun (34).

12. Tambour de sélection selon la revendication 1, **caractérisé en ce que** le tambour de sélection (1) présente une pluralité de goupilles de sélection (43) pour introduire le mouvement de sélection dans le tambour de sélection (1), les goupilles de sélection (43) venant en prise au moins axialement avec au moins une portion d'extrémité dans au moins une formation de réception (48) d'un composant de retenue (44) en tôle.

13. Tambour de sélection selon la revendication 12, **caractérisé en ce que** la formation de réception (48) est réalisée sous forme de gaufrage ou d'estampage.
